# EUROPÄISCHE PATENTSCHRIFT

(11) **EP 3 983 164 B1**
(45) Veröffentlichungstag und Bekanntmachung des Hinweises auf die Patenterteilung: **09.04.2025**
(21) Anmeldenummer: 20731827.0
(22) Anmeldetag: 05.06.2020
(51) Int. Cl.: B23K 1/005, B23K 1/008, B23K 1/012, B23K 1/015, B23K 3/04, B23K 3/047, B23K 37/047, B23K 101/42

(54) **VORRICHTUNG ZUM LÖTEN**
DEVICE FOR SOLDERING
DISPOSITIF DE BRASAGE

(30) Priorität: 14.06.2019 DE 102019116290
(43) Veröffentlichungstag der Anmeldung: 20.04.2022
(73) Patentinhaber: Siegfried Hofmann GmbH, 96215 Lichtenfels (DE)
(72) Erfinder: FESEKER, Daniel, 96215 Lichtenfels (DE); DEUERLING, Michael, 96215 Lichtenfels (DE); FÖRSTE, Michael, 96215 Lichtenfels (DE); FUHRMANN, Kai, 96215 Lichtenfels (DE); GÜNTHER, Johannes, 96215 Lichtenfels (DE); BECHMANN, Benedikt, 96215 Lichtenfels (DE); NOLDEN, Heinz, 31162 Bad Salzdetfurth (DE)
(74) Vertreter: Hafner & Kohl PartmbB
(86) Internationale Anmeldenummer: PCT/EP2020/065580
(87) Internationale Veröffentlichungsnummer: WO 2020/249474

(56) Entgegenhaltungen:
- DE-A1- 10 031 071
- DE-A1- 102016 222 114
- DE-C2- 10 031 071
- US-A1- 2002 146 657

## Beschreibung

Die Erfindung betrifft eine Vorrichtung zum Löten, insbesondere zum Reflow-Löten, wenigstens einer Baugruppe, aufweisend eine Prozesskammereinrichtung. In die Prozesskammer wird wenigstens eine Baugruppe bestehend aus wenigstens zwei Bauteilen eingebracht und durch Beaufschlagung von thermischer Energie auf die Baugruppe erfolgt eine Verbindung, wobei eine flüssige Phase durch Schmelzen eines Lotes oder durch Diffusion an den Grenzflächen entsteht. In der Regel werden die Bauteile nicht in deren Tiefe aufgeschmolzen. Es bildet sich hierbei typischerweise eine stoffschlüssige Verbindung der Bauteile durch das Aufschmelzen und Erstarren des Lotes. Die verwendete Vorrichtung ist eingerichtet, eine definierte Temperierung der Baugruppe bzw. der Bauteile und des Lotes derart zu erreichen, so dass ein Aufschmelzen des Lotes erreicht wird.

Entsprechende Vorrichtungen zum Löten wenigstens einer Baugruppe, aufweisend eine Prozesskammereinrichtung sind aus dem Stand der Technik dem Grunde nach bekannt. Beispielsweise ist es im Stand der Technik bekannt, dass im Zuge des Reflow-Lötens von SMD-Bauteilen (z. B. Dickschicht-Hybridschaltungen) ein Temperieren bzw. ein Löten der Bauteile derart erfolgt, dass die Baugruppe auf einem Band abgelegt werden und über dieses Band geradlinig einen tunnelartigen Lötofen durchlaufen. Hierbei sind an bestimmten Streckenabschnitten entlang der geraden Bewegungslinie unterschiedliche Temperaturbereiche durch den Lötofen vorgehalten. Dabei durchlaufen die Bauteile kontinuierlich und mit gleichbleibender Geschwindigkeit den tunnelartigen Lötofen. Das Reflow-Löten kann zumindest abschnittsweise auf einem Dampfphasenlöten, einem Konvektionslöten und/oder einem Infrarotlöten basieren.

Die DE 10 2016 222114 A1 offenbart den Oberbegriff des Anspruchs 1.

Der Erfindung liegt die Aufgabe zugrunde, eine Vorrichtung anzugeben, welche insbesondere im Hinblick auf eine einfache und schnelle sowie kostengünstige Maßnahme den durch die Vorrichtung benötigten Platzbedarf reduziert sowie die Möglichkeiten hinsichtlich der Art und Weise der thermischen Einwirkung auf die innerhalb der Vorrichtung thermisch beeinflussten Baugruppe und/oder Bauteile unter wirtschaftlich vertretbaren Bedingungen erhöht.

Die Aufgabe wird durch eine Vorrichtung zum Löten wenigstens einer Baugruppe gemäß Anspruch 1 sowie ein Verfahren gemäß Anspruch 13 gelöst. Die hierzu abhängigen Ansprüche betreffen mögliche Ausführungsformen der Vorrichtung bzw. des Verfahrens.

Die Erfindung betrifft eine Vorrichtung zum Löten, insbesondere zum Reflow-Löten, wenigstens einer Baugruppe, aufweisend eine Prozesskammereinrichtung, umfassend wenigstens zwei Prozesskammern zum Vorbereiten eines Lötverfahrens und/oder zum Durchführen eines Lötverfahrens und/oder zum Nachbereiten eines Lötverfahrens, wobei die wenigstens zwei Prozesskammern, insbesondere stapelartig, übereinander angeordnet sind. Durch die beiden übereinander angeordneten Prozesskammern wird es ermöglicht, in einer ersten Prozesskammer eine erste Baugruppe und in einer zweiten, über der ersten Prozesskammer angeordneten Prozesskammer zeitlich parallel eine weitere Baugruppe einem Lötverfahrensprozess zu unterziehen. Dabei kann es vorteilhaft sein die Prozessunterschritte wenigstens zweier in unterschiedlichen Prozesskammer behandelten Baugruppen mit einem zeitlichen, insbesondere mit einem geringen zeitlichen, Versatz zu behandeln. Mit anderen Worten erfolgt die Temperierung, z. B. die Erwärmung und/oder die Kühlung, der wenigstens zwei Baugruppen mit einem zeitlichen Versatz. Durch den zeitlichen Versatz kann eine bereits ausreichend erwärmte Baugruppe verlagert werden, wobei eine weitere Baugruppe erst noch eine gewisse Zeitspanne in der Prozesskammer vorzuliegen hat. Die zu lötende Baugruppe kann beispielsweise wenigstens zwei Bauteile umfassen, wobei ein erstes Bauteil typischerweise ein elektrisches und/oder elektronisches Bauelement umfasst, das auf ein zweites, insbesondere elektrisches und/oder elektronisches, Bauteil aufgelötet wird. Das zweite Bauteil, auf welches wenigstens ein erstes Bauteil aufgelötet wird, kann plattenartig ausgebildet sein und wenigstens eine Leiterbahn umfassen. So kann das zweite Bauteil als Platine bzw. als Leiterplatte ausgebildet sein, auf welche ein oder mehrere Bauteile bzw. Bauelemente durch eine Lötverbindung befestigt werden. Hierzu kann auf wenigstens ein Bauteil vor dem eigentlichen Lötvorgang, d. h. z. B. vor der thermischen Einwirkung auf die Baugruppe, auf wenigstens ein Bauteil ein Lötmittel, insbesondere eine Lotpaste, aufgebracht werden. Die mittelbar oder unmittelbar miteinander verbundenen Bauteile der Baugruppe können dabei beispielsweise auch in alle drei Raumrichtungen weisend an einer Oberfläche eines Grundbauteils angeordnet oder anordenbar sein, d. h. z. B., dass ein Bauteil an einer Oberseite, ein weiteres Bauteil an einer Vorderseite und noch ein weiteres Bauteil an einem seitlichen Bereich des Grundbauteils angelötet bzw. anlötbar ist. Alternativ oder zusätzlich kann eine 3D-Platine als Bestandteil der Baugruppe verwendet werden. Eine Lotpaste kann ein Lotmetallpulver und ein Flussmittel umfassen. Das Lötmittel wird während des Temperierens durch die Vorrichtung zumindest abschnittsweise aufgeschmolzen. Nach Abkühlen des Lötmittels bzw. nach dem Aushärten des zumindest abschnittsweise aufgeschmolzenen Lötmittels bildet sich eine feste und/oder steife Verbindung der einzelnen Bauteile und des Lötmittels der Baugruppe aus.

Die erfindungsgemäße Vorrichtung weist wenigstens zwei Prozesskammern zum Durchführen zumindest eines Teilschritts des Lötverfahrens auf. Das Lötverfahren lässt sich in vorbereitende Schritte des Lötverfahrens, in das Lötverfahren durchführende Schritte des Lötverfahrens und in nachbereitende Schritte des Lötverfahrens unterteilen. Vorbereitende Schritte des Lötverfahrens können zum Beispiel sein: Reinigen wenigstens eines der miteinander zu verlötenden Bauteile, Ausrichtung und/oder Platzierung wenigstens zweier miteinander zu verlötender Bauteile, zumindest abschnittsweises Aufbringen bzw. Applizieren eines Lötmittels auf wenigstens eines der wenigstens zwei miteinander zu verlötenden Bauteile, thermisches, optisches und/oder taktiles Erfassen wenigstens eines der miteinander zu verlötenden Bauteile und/oder ein Vortemperieren der Baugruppe und/oder des Lötmittels und/oder Verlagerung bzw. Handling der wenigstens einen Baugruppe von einer nicht-Arbeitsposition zu einer in einer Prozesskammer befindlichen Arbeitsposition oder eine Verlagerung bzw. Handling einer Baugruppe in der umgekehrten Richtung. Durchführende Schritte des Lötverfahrens kann die Schritte umfassen, welche, insbesondere unmittelbar, mit der Schaffung der stoffschlüssigen Verbindung im Zusammenhang stehen, so zum Beispiel: (a) ein Vorwärmen wenigstens eines Bauteils und/oder eines Lötmittels und/oder (b) ein Temperieren, insbesondere Erwärmen, einer Baugruppe bzw. eines auf wenigstens einem Bauteil angeordneten Lötmittels und/oder (c) ein aktives oder passives Abkühlen eines zumindest abschnittsweise an- oder aufgeschmolzenen Lötmittels und/oder aktives oder passives Abkühlen der Baugruppe und/oder Bauteils. Nachbereitende Schritte eines Lötverfahrens können eine weitergehende Temperierung, d. h. eine nochmalige Erwärmung und/oder eine aktive oder passive Abkühlung der erstarrten Lotpaste und/oder wenigstens eines Bauteils und/oder wenigstens einer Baugruppe umfassen. Auch kann beispielsweise die thermische, optische und/oder taktile Erfassung der zumindest abschnittsweise durch den Lötprozess miteinander verbundenen Baugruppe einen nachbereitenden Lötverfahrensschritt darstellen. Unabhängig davon, ob die thermische, optische und/oder taktile Erfassung als vorbereitender Schritt und/oder als nachbereitender Lötverfahrensschritt vorgesehen ist, kann das wenigstens eine hierfür verwendete Erfassungsmittel in oder an zumindest einer Prozesskammereinrichtung, insbesondere in wenigstens einer Prozesskammer, und/oder in oder an zumindest einer Handlingeinheit angeordnet sein. Beispielsweise kann die thermische, optische und/oder taktile Erfassung als Inspektionssystems zur Überwachung und/oder zur Kontrolle der thermischen Einwirkungen auf die Baugruppe bzw. das Verhalten bzw. der Verlauf der Baugruppe bzgl. der thermischen Einwirkung dienen.

Ein Aspekt des Verfahrens ist es, dass wenigstens eine Handlung zur Vorbereitung eines Lötverfahrens und/oder zum Durchführen des Lötverfahrens und/oder zum Nachbereiten des Lötverfahrens ausgeführt wird, während die wenigstens eine Baugruppe in einer Prozesskammer der Vorrichtung platziert ist. Die erfindungsgemäße Vorrichtung sieht wenigstens zwei Prozesskammern vor, die, insbesondere stapelartig, übereinander angeordnet sind. Dadurch, dass die wenigstens zwei Prozesskammern übereinanderliegend angeordnet oder ausgebildet sind, kann in zwei Prozesskammern bzw. in zwei Prozessräumen eine auf das Lötverfahren einwirkende Handlung ausgeführt werden und gleichzeitig ein Lötverfahren bei geringerem Flächenbedarf als bei Vorrichtungen des Stands der Technik ausgeführt werden. Beispielsweise sind zwei, drei, vier und/oder fünf Prozesskammer übereinanderliegend angeordnet. Dadurch, dass die Prozesskammern in die Höhe gestapelt bzw. angeordnet sind, wird der z. B. in einer Werkshalle benötigte Flächenbedarf reduziert. Eine Erstreckung in die Höhe (in die Z-Richtung) ist meist ohne Einschränkungen möglich, da die Deckenhöhe von üblichen Werkshallen regelmäßig nicht ausgenutzt wird. So zeigen insbesondere konventionelle Reflow-Lötöfen eine im wesentliche längliche und horizontale Erstreckung auf.

Das optional auf der erfindungsgemäßen Vorrichtung auszuführende Reflow-Löten betrifft ein Weichlötverfahren zum Löten von SMD-Bauteilen (Surface-Mounted Device), wobei die Bauelemente bzw. die Bauteile vermittels lötfähiger Anschlussflächen direkt auf ein weiteres Bauteil (z. B. eine Leiterplatte) gelötet werden. Die gebildete Baugruppe kann auch als Flachbaugruppe bezeichnet werden. Allgemein können SMD-Bauteile einseitig oder beidseitig auf einem Bauteil bzw. einer Leiterplatte angeordnet bzw. befestigt werden.

Mit einer Anordnung wenigstens zweier Prozesskammern übereinander können diese beispielsweise "deckungsgleich" angeordnet oder ausgebildet sein, d. h. im Falle einer Projektion der Begrenzungslinien der Prozesskammern fallen die Begrenzungslinien zusammen. Alternativ hierzu kann wenigstens eine Prozesskammer zu einer benachbarten Prozesskammer versetzt übereinanderliegend angeordnet oder ausgebildet sein. Der Versatz kann beispielsweise dabei einen Bruchteil oder ein ganzzahliges Vielfaches einer Breite oder einer Länge wenigstens einer Prozesskammer umfassen. Insbesondere können wenigstens zwei, vorzugsweise sämtliche, Prozesskammer der Vorrichtung eine identische Breite und/oder eine identische Länge und/oder eine identische Höhe aufweisen. Im Falle von zumindest abschnittsweise gleichartig und/oder identisch aufgebauten Prozesskammern können zu deren Bildung verwendete Bauteile als Gleichteile verwendet werden. Grundsätzlich können wenigstens zwei Prozesskammern nach einem Rastermaß zueinander dimensioniert und/oder in einem Rastermaß zueinander beabstandet angeordnet sein. Das Rastermaß ermöglicht es, eine platzsparende Anordnung von insbesondere modular zusammensetzbaren Prozesskammern oder werksseitig verbaubaren Prozesskammern zu ermöglichen.

Die wenigstens zwei Prozesskammern können jeweils einen von Wandungsabschnitten begrenzten Innenraum aufweisen. Hierbei kann der Innenraum zumindest zu einer Seite, vorzugsweise zu zwei Seiten jeweils eine zumindest temporär öffenbare Öffnung aufweisen, durch welche wenigstens eine Baugruppe in den Innenraum der Prozesskammer einbringbar und aus dem Innenraum der Prozesskammer herausführbar ist. Beispielsweise werden zumindest eine, vorzugsweise zumindest zwei, Baugruppe(n) gleichzeitig in einer Prozesskammer zur thermischen Beaufschlagung platziert. Damit umfassen die Prozesskammer jeweils einen eine räumlich-körperliche Gestalt durch Wandungen bzw. Wandungsabschnitte definierten Prozesskammerkörper. Folglich können die Wandungen bzw. die Wandungsabschnitte der Prozesskammern typischerweise den Innenraum der Prozesskammer definieren. Der Prozesskammerkörper kann einen Innenraum umfassen, der typischerweise durch die Wandungen bzw. Wandungsabschnitte ein begrenztes inneres Prozesskammerkörpervolumen ausbildet. In den Innenraum bzw. in das Prozesskammerkörpervolumen ist die wenigstens eine Baugruppe einbringbar und wird dort zumindest temporär einer Erwärmung und/oder einer Kühlung unterzogen. Zumindest während der thermischen Einwirkung auf die wenigstens eine in dem Innenraum der Prozesskammer angeordnete Baugruppe kann sich diese Baugruppe im Stillstand befinden, d. h. die Baugruppe führt zumindest temporär während der thermischen Beaufschlagung keine Relativbewegung zu der Prozesskammer aus. Alternativ oder zusätzlich kann die wenigstens eine im Innenraum der Prozesskammer platzierte Baugruppe zumindest abschnittsweise eine kontinuierliche oder diskontinuierliche Bewegung, insbesondere relativ zu der Prozesskammer, ausführen.

Die Vorrichtung kann neben den wenigstens zwei übereinander angeordneten Prozesskammern zusätzlich weitere Prozesskammer umfassen, wobei zumindest ein Teil der weiteren Prozesskammern neben einer ersten und/oder neben einer zweiten Prozesskammer angeordnet sein können. Mit anderen Worten kann beispielsweise eine erste Prozesskammer in einer ersten Ebene (erstes Höhenniveau) und eine zweite Prozesskammer in einer zweiten Ebene (zweites Höhenniveau) angeordnet oder ausgebildet sein, wobei im Vergleich mit der ersten Ebene die zweite Ebene auf einem anderen Höhenniveau liegt. Eine weitere, dritte Prozesskammer ist neben der ersten Prozesskammer angeordnet oder ausgebildet und damit auf der gleichen Ebene bzw. auf dem gleichen Höhenniveau liegend wie die erste Prozesskammer platziert. Beispielsweise kann die zumindest eine weitere Prozesskammer hinter und/oder vor und/oder seitlich neben einer ersten Prozesskammer angeordnet oder ausgebildet sein.

Es ist möglich, dass durch wenigstens eine Prozessparametereinheit eine Steuerung- und/oder Regelung von zumindest einem, in einem Innenraum wenigstens einer Prozesskammer vorliegenden Prozessparameter ausführbar ist, insbesondere ist der bzw. die im Innenraum der wenigstens einen Prozesskammer vorliegende Druck und/oder Temperatur und/oder Atmosphäre durch die Prozessparametereinheit steuer- und/oder regelbar. Damit kann durch die Prozessparametereinheit eine gezielte Veränderung der innerhalb der Prozesskammer herrschenden Bedingungen bzw. Prozessparameter vorgenommen werden. So kann beispielsweise ein definierter Überdruck und/oder ein definierter Unterdruck und/oder ein Vakuum durch die Prozessparametereinheit und/oder durch ansteuern eines mit dem Innenraum der Prozesskammer in Wirkverbindung stehenden Prozessparameterveränderungsmittels (z. B. ansteuerbare Pumpe) ausgeführt werden.

Alternativ oder zusätzlich kann durch die Prozessparametereinheit eine Veränderung der zumindest abschnittsweise im Innenraum der Prozesskammer herrschenden Temperaturen erfolgen. Hierbei kann die Prozessparametereinheit selbst oder durch Ansteuerung eines Temperiermittels (z. B. elektrisches Heizelement und/oder Lenkklappen zum Zuleiten oder Umleiten eines temperierten Gasstroms) zumindest abschnittsweise eine definierte Temperatur im Innenraum der Prozesskammer erwirken, d. h. z. B. eine Erwärmung oder eine Abkühlung auf eine Solltemperatur ausführen.

Ferner kann alternativ oder zusätzlich vorgesehen sein, dass die Prozessparametereinheit die im Innenraum herrschende Atmosphäre verändert bzw. auf eine Soll-Atmosphäre steuert- bzw. regelt. Beispielsweise kann zur Kühlung des Innenraums einer Prozesskammer und damit zur Kühlung der wenigstens einen in dem Innenraum der Prozesskammer befindlichen Baugruppe ein Kühlgas in die Prozesskammer eingebracht werden. Zur Erzeugung des Kühlgases kann ein flüssiges Kühlgas verwendet werden, beispielsweise wird dieses durch Mischen von gasförmigen und flüssigen Inertgas erzeugt. Als Inertgas kann zumindest temporär beispielsweise Stickstoff, insbesondere Flüssigstickstoff (LN2), Argon, Helium und/oder Kohlenstoff verwendet werden.

Das in die Prozesskammer eingebracht Kühlgas kann in einem vorrichtungsseitig, insbesondere prozesskammereinrichtungsseitig, angeordneten Kühlaggregate erzeugt werden. Das Kühlaggregat kann hierbei beispielsweise einen Wärmetauscher bzw. einen Kühler sowie ein Gebläse zur Erzeugung eines in die Prozesskammer eingeleiteten Kühlgasstroms umfassen. Ein Kühleffekt kann beispielsweise dadurch erreicht werden, dass ein verwendeter Flüssigstickstoff im Zuge seiner Aggregatsänderung Wärme aus der Umgebung, hier dem Innenraum der Prozesskammer, entzieht und damit die Prozesskammer bzw. die wenigstens eine sich in der Prozesskammer befindliche Baugruppe kühlt. Die Steuerung und/oder Regelung der Prozessparameter in der Prozesskammer kann vorzugsweise derart erfolgen, dass eine Einstellung bzw. eine Regulierung des Drucks, der Temperatur und/oder der Atmosphäre abhängig von der wenigstens einen in der Prozesskammer befindlichen oder einzubringenden Baugruppe ausgeführt wird. Damit wird es ermöglicht, dass die in der Prozesskammer vorherrschenden Prozessparameter spezifisch auf die in dem Innenraum der Prozesskammer eingebrachte Baugruppe regulierbar ist, anders ausgedrückt kann wenigstens ein Prozessparameter auf die Baugruppe direkt geregelt werden. Damit kann z. B. eine gezielte Temperierung der Bauteil- und/oder Baugruppenoberfläche erfolgen. Auch kann z. B. anhand eines Regelkreises ein Soll-Prozessparameter im Innenraum der Prozesskammer eingestellt werden.

In einer vorteilhaften Ausführungsform ist es vorgesehen, dass über die Prozessparametereinheit wenigstens ein erster, im Innenraum der ersten Prozesskammer vorliegender Prozessparameter unabhängig von einem zweiten, in einem Innenraum einer zweiten Prozesskammer vorliegenden Prozessparameter steuer- und/oder regelbar ist. Damit kann die Vorrichtung in unterschiedlichen Prozesskammern unterschiedliche Prozessparameter vorhalten um damit zeitlich parallel oder zeitlich versetzt in den jeweiligen Prozesskammern Baugruppen unabhängig voneinander Erwärmen und/oder Kühlen. Die prozesskammerunabhängige Prozessparametereinstellung betrifft neben der Temperierung auch optional die jeweilige Prozesskammeratmosphäre und/oder den jeweiligen Prozesskammerdruck. Es kann sich als vorteilhaft erweisen, wenn eine, eine erste Prozesskammer zu einer zweiten Prozesskammer trennende Wandung bzw. Wandungsabschnitt eine thermische Isolierung aufweist, sodass eine wechselweise thermische Beeinflussung benachbarter Prozesskammern reduziert oder ausgeschlossen wird. Durch ein entsprechend ansteuerbares und/oder leistungsfähiges Temperiermittel einer Prozesskammer kann neben der direkten Temperierung dieser Prozesskammer auch eine Querbeeinflussung dieser Prozesskammer durch eine benachbarte (über oder seitlich neben der ersten Prozesskammer angeordneten), weiteren Prozesskammer kompensiert werden.

Es ist möglich, dass die Prozesskammern jeweils wenigstens eine Einführ- und/oder Ausführöffnung aufweisen, über welche wenigstens eine zu lötende und/oder gelötete Baugruppe über eine Einführ- und/oder Ausführbewegung in die Prozesskammer einführbar bzw. aus der Prozesskammer ausführbar ist. Hierzu kann die Prozesskammer wenigstens zwei, durch Durchbrüche der Wandung und/oder der Wandungsabschnitte angeordnete oder ausgebildete Öffnungen aufweisen, wobei die Einführbewegung durch eine erste Öffnung und die Ausführbewegung durch eine zweite Öffnung der Prozesskammer erfolgen kann. Alternativ kann die Ein- und Ausführbewegung durch dieselbe Öffnung erfolgen, in diesem Fall ist bereits eine einzige Öffnung einer Prozesskammer ausreichend.

Es kann vorteilhaft sein, wenn die Einführbewegung zum Einführen einer Baugruppe in eine Prozesskammer zeitlich und/oder örtlich parallel zu der Ausführbewegung zum Ausführen einer Baugruppe aus dieser Prozesskammer erfolgt bzw. verläuft, bevorzugt ist die Einführbewegung in die entgegengesetzte Richtung als die Ausführbewegung gerichtet.

Die Einführ- und/oder Ausführbewegung kann als zumindest abschnittsweise geradlinige und/oder als zumindest abschnittsweise gekrümmte Bewegung ausgestaltet sein, wobei die Einführ- und die Ausführbewegung zumindest abschnittsweise parallel zueinander ausgerichtet sein kann. Alternativ kann eine geradlinig verlaufende Einführbewegung zu einer geradlinig verlaufenden Ausführbewegung einen Winkel einschließen.

Alternativ oder zusätzlich kann es vorgesehen sein, dass die Einführbewegung zum Einführen einer Baugruppe in eine Prozesskammer und die Ausführbewegung zum Ausführen einer Baugruppe aus dieser Prozesskammer zumindest abschnittsweise nicht parallel ausgerichtet sind. Hierbei kann die Einführbewegung und die Ausführbewegung zumindest abschnittsweise, vorzugsweise vollständig, geradlinig ausgebildet sein, wobei zumindest die beiden geradlinigen Abschnitte der Einführ- und Ausführbewegung einen Winkel ungleich 180° einschließen, bevorzugt wird ein Winkel von 5° bis 175° eingeschlossen, besonders bevorzugt wird ein Winkel von 30° bis 150° eingeschlossen, höchst bevorzugt wird ein Winkel von 60° bis 120° eingeschlossen. Beispielsweise kann mit einem Winkel von 90° eine Prozesskammer gestaltet werden, in welcher in einer ersten Richtung eine Baugruppe einführbar und in einer seitlich dazu, d. h. rechtwinklig von der ersten Richtung verlaufenden Richtung die Baugruppe aus der Prozesskammer herausführbar ist. Damit kann eine auf die am Aufstellort der Vorrichtung vorliegenden Freiräume angepasste Handlingstruktur zum Handhaben, insbesondere zum Befüllen und zum Entnehmen der Baugruppe, verwendet werden. Hierzu kann die Prozesskammer beispielsweise derart ausgebildet sein, dass der Winkel zwischen der Einführbewegung und der Ausführbewegung in den oben genannten Winkelbereichen veränderbar bzw. einstellbar ist. Hierbei können die Wandungen und/oder die Wandabschnitt der Prozesskammer variabel anordenbar sein. Alternativ oder zusätzlich kann es vorgesehen sein, dass wenigstens eine Baugruppe in eine Richtung senkrecht zur Aufstellfläche der Vorrichtung aus einer Prozesskammer hinein- und/oder herausgeführt wird.

Es ist möglich, dass die wenigstens eine Einführ- und/oder Ausführöffnung wenigstens einer Prozesskammer durch wenigstens ein Verschlusselement zumindest abschnittsweise verschließbar ist bzw. sind, insbesondere verschließt das wenigstens eine Verschlusselement die Prozesskammer derart, dass eine im Innenraum der Prozesskammer vorliegende Temperatur und/oder Druck und/oder Atmosphäre zu einem Bereich außerhalb dieser Prozesskammer abgeschlossen wird. Dabei kann es beispielsweise vorgesehen sein, dass während der Ein- und Ausführung einer Baugruppe in bzw. aus dem Innenraum der Prozesskammer das Verschlusselement temporär geöffnet oder teilgeöffnet ist. Zumindest während des Lötprozesses selbst, d. h. während der thermischen Beaufschlagung der Baugruppe und insbesondere eines an der Baugruppe befindlichen Lötmittels, kann das Verschlusselement geschlossen oder teilgeschlossen sein. Durch das Schließen der Prozesskammer können die dort einzustellenden Prozessparameter schneller, genauer und mit reduziertem Energieaufwand erreicht werden.

Optional kann es vorgesehen sein, dass wenigstens ein Verschlusselement Teil einer an wenigstens einer Öffnung, vorzugsweise an sämtlichen Öffnungen, angeordneten schleusenartigen und/oder schleusenförmigen Verschlusseinrichtung ist. Die schleusenartige Verschlusseinrichtung erlaubt ein Hindurchführen einer Baugruppe durch die mit der Verschlusseinrichtung versehene Öffnung der Prozesskammer unter typischerweise nahezu oder vollständig unbeeinträchtigter Aufrechterhaltung der in dem Innenraum der Prozesskammer herrschenden Prozessparameter. Beispielsweise weist die Verschlusseinrichtung ein äußeres und ein inneres Verschlusselement auf, wobei das innere Verschlusselement den Innenraum der Prozesskammer zu einem Zwischenraum zwischen einer Prozesskammer und einem äußerem Bereich der Prozesskammer abtrennt. Das äußere Verschlusselement trennt den Zwischenraum von dem äußeren Bereich der Prozesskammer ab. Mit einem derartigen Aufbau kann durch wechselweises Öffnen und Schließen des inneren und äußeren Verschlusselements und durch ein darauf abgestimmtes Bewegen der Baugruppe dessen Verlagerung ermöglicht werden, ohne dabei eine wesentliche Beeinträchtigung der im Inneren der Prozesskammer herrschenden Prozessparameter hervorzurufen. So kann beispielsweise mit nur geringem Energieaufwand trotz Betätigung der schleusenartigen Verschlusseinrichtung eine Verlagerung der Baugruppe aus dem oder in den Innenraum der Prozesskammer unter Aufrechterhaltung und/oder zumindest geringfügiger Beeinträchtigung eine bzw. einer im Innenraum der Prozesskammer herrschenden Temperatur und/oder Drucks und/oder Atmosphäre erreicht werden.

Die Beschickung und/oder Entleerung bzw. das Einbringen und/oder die Entnahme der Baugruppe aus der Prozesskammer kann zumindest abschnittsweise, vorzugsweise vollständig, manuell oder automatisiert erfolgen. Eine manuelle Entnahme kann hierbei beispielsweise eine durch einen Werker gesteuerte Einbringung und/oder Entnahme der wenigstens einen Baugruppe vermittels eines manuell angesteuerten Roboters umfassen.

Es kann beispielsweise vorgesehen sein, dass zumindest eine wenigstens ein Fördermittel umfassende Fördereinrichtung zur Ausführung einer Förderbewegung verwendet wird, wobei vermittels dem Fördermittel eine zu lötende und/oder gelötete Baugruppe von einer ersten Position zu einer ersten, einer ersten Prozesskammer zugeordneten Übergabeposition verlagerbar ist, insbesondere umfasst die Förderbewegung des Fördermittels eine Bewegungskomponente in Vertikalrichtung. Mit dem Fördermittel kann damit eine Baugruppe von einer ersten, z. B. tieferliegenden Position, in eine höherliegende Übergabeposition verbracht werden. Hierzu kann das Fördermittel beispielsweise nach Art eines Aufzugs ausgebildet sein. Alternativ oder zusätzlich kann das Fördermittel als Kran oder als höhenverlagerbare Plattform ausgebildet sein. Die Übergabeposition ist beispielsweise als ein auf gleicher vertikaler Höhe wie die der Übergabeposition zugeordnete Prozesskammer angeordnet. So kann nach Erreichen der Übergabeposition die Baugruppe durch eine im Wesentlichen oder ausschließlich horizontale Verlagerung in eine im Innenraum der Prozesskammer verortete Arbeitsposition bewegt werden.

Alternativ oder zusätzlich zu einer Fördereinrichtung kann die Vorrichtung beispielsweise zumindest eine wenigstens ein Übergabemittel umfassende Übergabeeinrichtung zur Ausführung einer Übergabebewegung umfassen, wobei vermittels dem Übergabemittel wenigstens eine zu lötende und/oder gelötete Baugruppe (a) von einer nicht-Arbeitsposition, insbesondere einer Übergabeposition, zu einer in dem Innenraum einer ersten Prozesskammer liegenden ersten Arbeitsposition und/oder (b) von einer in dem Innenraum einer ersten Prozesskammer liegenden ersten Arbeitsposition zu einer nicht-Arbeitsposition, insbesondere einer Übergabeposition, und/oder (c) von einer in dem Innenraum einer ersten Prozesskammer liegenden ersten Arbeitsposition zu einer in dem Innenraum einer zweiten Prozesskammer liegenden zweiten Arbeitsposition verlagerbar ist. Beispielsweise umfasst die Übergabebewegung eine Bewegungskomponente in Horizontalrichtung. Die Übergabeeinrichtung dient mit anderen Worten zur weiteren Verlagerung einer durch z. B. manuell oder durch die Fördereinrichtung in eine Übergabeposition bewegte Baugruppe, von der Übergabeposition weg hin zu einer Arbeitsposition und/oder von einer Arbeitsposition zu einer Übergabeposition und/oder von einer ersten Arbeitsposition zu einer weiteren Arbeitsposition.

Zur Verlagerung der Baugruppe kann die Übergabeeinrichtung und/oder das Übergabemittel eine Bewegung relativ zu der Prozesskammer ausführen. Typischerweise ist die Baugruppe auf dem Übergabemittel aufliegend und/oder von Greifelementen des Übergabemittels ergriffen und führt eine gemeinsame Bewegung mit dem Übergabemittel relativ zu der Prozesskammer aus. Nach erlangen des Zielorts kann die Verbindung von dem Übergabemittel und der Prozesskammer aufgehoben werden, ggf. kann das Übergabemittel zumindest temporär in die Prozesskammer eingreifen und diese nach Ablage oder Aufnahme der Baugruppe die Prozesskammer wieder verlassen. Alternativ oder zusätzlich kann das Übergabemittel einen Bestandteil der Prozesskammer und/oder der Handlingeinheit bilden bzw. in die Prozesskammer und/oder in die Handlingeinheit integriert sein. Auch kann es vorgesehen sein, dass zumindest zwei in Prozessrichtung der wenigstens einen Baugruppe gesehen hintereinander angeordneten Prozesskammern jeweils ein Übergabemittel umfassen, wobei die beiden Übergabemittel eine Übergabe der wenigstens einen Baugruppe aus einer ersten zu einer weiteren Prozesskammer ermöglichen, insbesondere erfolgt hierbei eine vertikale Bewegung der wenigstens einen Baugruppe.

Die Fördereinrichtung kann beispielsweise die Baugruppe zumindest abschnittsweise abstützend und/oder greifend tragen. Im Falle des Abstützens kann die Fördereinrichtung einen Ablagebereich, insbesondere eine Ablagefläche, umfassen. Im Falle des Greifens kann die Fördereinrichtung Greif- und/oder Klemmmittel umfassen, mittels derer die Baugruppe von der Fördereinrichtung gegriffen bzw. gehalten werden kann. Allgemein kann die Fördereinrichtung eine temporäre kraft- und/oder formschlüssige Verbindung mit der Baugruppe eingehen.

Um eine Bewegung der Baugruppe (a) auf das Fördermittel und/oder von dem Fördermittel weg zu ermöglichen, kann es sich als vorteilhaft erweisen, wenn das Fördermittel eine Bewegungseinheit bzw. ein Übergabemittel umfasst, welche eine Bewegung der Baugruppe relativ zu dem Fördermittel ermöglicht. Beispielsweise kann die Bewegungseinheit bzw. das Übergabemittel als ein auf einem Ablagebereich, insbesondere einer Ablagefläche, des Fördermittels angeordnetes Förderband oder als eine Förderkette ausgebildet sein. Durch z. B. Ablegen einer Baugruppe auf die Bewegungseinheit, insbesondere auf das Förderband, wird die Baugruppe von der Bewegungseinheit getragen und kann relativ zu dem Fördermittel verlagert werden. Die Bewegungseinheit kann variabel ausgebildet sein, so dass diese an unterschiedlich geometrisch ausgebildete Bauteile und/oder Baugruppen und/oder an eine unterschiedliche Anzahl an gleichzeitig zu bewegender Bauteile und/oder Baugruppen, manuell oder automatisiert, anpassbar ist. So kann beispielsweise ein Wechsel des auf der Vorrichtung zu lötenden Produktes bzw. der zu lötenden Baugruppe mit einer Verstellung von zumindest Bestandteilen der Bewegungseinheit einhergehen.

Es kann vorgesehen sein, dass die Fördereinrichtung und die Übergabeeinrichtung in einer gemeinsamen Baueinheit verwirklicht sind, d. h. z. B., dass das Fördermittel und das Übergabemittel zumindest abschnittsweise als ein, insbesondere gemeinsamer, Körper bzw. als eine, insbesondere gemeinsame, Einheit ausgebildet sind.

In einer bevorzugten Ausführungsform ist bzw. sind die Fördereinrichtung und/oder die Übergabeeinrichtung in einer Handlingeinheit angeordnet, wobei die Handlingeinheit mit der Prozesskammereinrichtung zumindest temporär verbindbar oder verbunden ist. Die Handlingeinheit kann ein, zumindest das wesentliche Volumen der Handlingeinheit umgebendes Gehäuse umfassen, wobei das Gehäuse damit insbesondere die räumlich-körperliche Gestalt der Handlingeinheit bildet und diese insbesondere durch Wandungen bzw. Wandungsabschnitte definiert. Im Inneren des Gehäuses und damit im Inneren der Handlingeinheit kann beispielsweise das Fördermittel und/oder das Übergabemittel beweglich gelagert sein, wobei ein zumindest temporäres Herausfahren aus dem Haupterstreckungsvolumen der Handlingeinheit für das Fördermittel und/oder das Übergabemittel optional vorgesehen sein kann. Typischerweise bewegt sich jedoch das Fördermittel und/oder das Übergabemittel zumindest überwiegend und/oder ausschließlich innerhalb des durch das Gehäuse gebildete Haupterstreckungsvolumen der Handlingeinheit.

Das Gehäuse der Handlingeinheit kann wenigstens eine Öffnung aufweisen, durch welche eine Baugruppe von einem außerhalb der Handlingeinheit befindlichen Ort in einen innerhalb der Handlingeinheit befindlichen Ort oder umgekehrt hindurchführbar ist. Beispielsweise umfasst die Handlingeinheit eine erste Öffnung zum Einbringen von zu lötenden oder gelöteten Baugruppen in die Handlingeinheit, eine zweite Öffnung zum Hindurchführen der Baugruppe von der Handlingeinheit zu einem Innenraum, insbesondere zu einem Arbeitsbereich, einer Prozesskammer. Grundsätzlich kann die Baugruppe nach deren zumindest thermischen Einwirkung innerhalb der Prozesskammer den Zuführweg in umgekehrter Weise zur Entnahme zurücklegen. Alternativ kann es vorgesehen sein, dass die Handlingeinheit eine dritte Öffnung aufweist, durch welche eine Baugruppe nach dessen Verlagerung von der Prozesskammer in die Handlingeinheit, aus der Handlingeinheit zu einem nachgelagerten Bestimmungsort, hindurchführbar ist. Beispielsweise ist die Baugruppe durch die dritte Öffnung manuell oder automatisiert aus der Handlingeinheit entnehmbar bzw. hindurchführbar.

Die Handlingeinheit kann als mobiles Transportsystem ausgebildet sein, insbesondere als fahrerloses mobiles Transportsystem (FTS). Bevorzugt ist wenigstens eine gelötete oder zu lötende Baugruppe durch das mobile Transportsystem von einem vorrichtungsfernen ersten Ort zu einem vorrichtungsnahen zweiten Ort transportierbar. Es ist möglich, dass ein mobiles Transportsystem eine Mehrzahl an zu lötenden oder an gelöteten Baugruppen als gruppierte Baugruppen (z. B. Magazin) gleichzeitig transportiert. Hierfür kann beispielsweise ein Baugruppenträger verwendet werden, in oder an welchem eine Mehrzahl an Baugruppe in einer definierten Ausrichtung und/oder Position zueinander anordenbar sind. Ein Baugruppenträger kann optional mit Schwingungsdämpfungsmittel versehen sein, welche eine schwingungsgedämpfte Lagerung der Baugruppen an einem Transportsystem ermöglicht. Damit kann eine auf Grund der Fahrbewegung auf die Baugruppen einwirkende Beschleunigung gedämpft werden. Derartige Beschleunigungen können sich insbesondere im Falle eines Überfahrens von Schlaglöchern oder ähnlichem ergeben. Hierbei kann auf dem mobilen Transportsystem die Handlingeinheit unlösbar, d. h. nicht zerstörungsfrei lösbar, oder lösbar befestigt sein. Beispielsweise ist die Handlingeinheit über Fixiermittel (z. B. Schrauben) lösbar mit dem Transportsystem verbunden. Auch kann das Transportsystem und/oder die Handlingeinheit eine Kopplungseinheit umfassen, welche es erlaubt manuell oder automatisiert ein Verbindung und/oder ein Lösen des Transportsystems mit der Handlingeinheit vorzunehmen.

Typischerweise kann das Transportsystem zum Transport von wenigstens einer Baugruppe, insbesondere mehrerer Baugruppen, und/oder von einer Handlingeinheit verwendet werden.

Alternativ oder zusätzlich können Bestandteile der Handlingeinheit und/oder Bestandteile der Prozesskammereinrichtung zumindest abschnittsweise und/oder temporär mit einem gemeinsamen Gehäuse umgeben sein. Anders ausgedrückt kann die Handlingeinheit und die Prozesskammer zumindest abschnittsweise als gemeinsame Einheit ausgebildet sein. Beispielsweise bildet die Prozesskammereinrichtung einen ersten geometrischen Körper und die Handlingeinheit einen weiteren geometrischen Körper, wobei die beiden geometrischen Körper miteinander verbunden sind, insbesondere lösbar miteinander verbunden sind. In dieser Ausgestaltung ist die Handlingeinheit als stationäre Einheit anzusehen, wohingegen eine zumindest abschnittsweise über z. B. das Transportsystem verlagerbare Handlingeinheit als mobile Handlingeinheit verstanden werden kann.

In einer weiteren optionalen Ausführungsform können an der Prozesskammereinrichtung wenigstens zwei, jeweils zumindest eine Fördereinrichtung und/oder eine Übergabeeinrichtung umfassende Handlingeinheiten verbindbar oder verbunden sein. Bevorzugt erfolgt die Zuführung einer zu lötenden oder gelöteten Baugruppe zu der wenigstens einen Prozesskammer über eine erste Handlingeinheit und eine Abführung der zu lötenden und/oder gelöteten Baugruppe aus dieser Prozesskammer durch eine zweite Handlingeinheit. Alternativ können die wenigstens zwei an der Prozesskammereinrichtung verbindbaren oder verbundenen Handlingeinheiten jeweils eine Zuführung und eine Abführung der Baugruppe ermöglichen. Hierbei können die beiden Handlingeinheiten zumindest temporär das Handling der Baugruppen für dieselben Prozesskammern und/oder zumindest temporär für unterschiedliche Prozesskammern unabhängig voneinander übernehmen.

Die wenigstens zwei Handlingeinheiten können an zwei sich gegenüberliegenden Seiten der Prozesskammereinrichtung angeordnet oder ausgebildet sein. Alternativ oder zusätzlich kann zumindest eine Handlingeinheit relativ zu einer weiteren Handlingeinheit seitlich ums Eck liegend an der Prozesskammereinrichtung angeordnet oder ausgebildet sein.

Innerhalb der wenigstens einen Prozesskammer und/oder an dem Fördermittel und/oder an dem Übergabemittel kann beispielsweise wenigstens ein Haltemittel angeordnet sein, das eingerichtet ist, die zu lötende und/oder die gelötete Baugruppe kraft- und/oder formschlüssig zu halten. Hierbei kann wenigstens ein Haltemittel als ein mit wenigstens einem Greifelement versehenes Greifmittel ausgebildet sein. Alternativ oder zusätzlich kann das Haltemittel wenigstens abschnittsweise mittels Klemmmittel die Baugruppe halten bzw. klemmend sich mit der Baugruppe verbinden. Das Haltemittel, insbesondere das Klemmmittel, kann an wechselnde Geometrien und/oder an eine unterschiedliche Anzahl an gleichzeitig zu haltender Baugruppen manuell oder automatisiert anpassbar sein. Damit kann mit anderen Worten das Haltemittel an eine Baugruppen- bzw. an eine Produktgröße anpassbar sein.

In einer weiteren vorteilhaften optionalen Ausgestaltung der Vorrichtung kann es vorgesehen sein, dass zumindest zwei, jeweils wenigstens zwei, insbesondere stapelartig, übereinander angeordnete Prozesskammern umfassende Prozesskammereinrichtungen miteinander verbunden sind, bevorzugt sind die Prozesskammern der ersten Prozesskammereinrichtung und die Prozesskammern der zweiten Prozesskammereinrichtung parallel zueinander ausgerichtet sind. Hierbei kann in einem ersten, gemeinsamen Höhenniveau eine erste Prozesskammer einer ersten Prozesskammereinrichtung und eine weitere Prozesskammer einer zweiten Prozesskammereinrichtung und in einem zweiten, gemeinsamen Höhenniveau eine zweite Prozesskammer der ersten Prozesskammereinrichtung und eine zweite weitere Prozesskammer der zweiten Prozesskammereinrichtung angeordnet oder ausgebildet sein. Damit kann ohne eine vertikale Bewegung ausführen zu müssen, eine in der ersten Prozesskammer befindliche Baugruppe durch horizontale Verlagerung in die weitere Prozesskammer der zweiten Prozesskammereinrichtung überführt werden. Das gleiche gilt für eine in der zweiten Prozesskammer der ersten Prozesskammereinrichtung befindlichen Baugruppe, welche durch, insbesondere ausschließliche, horizontale Verlagerung in die zweite weitere Prozesskammer der zweiten Prozesskammereinrichtung verlagerbar ist.

Optional kann es vorgesehen sein, dass an der ersten Prozesskammereinrichtung eine erste Handlingeinheit zur Zuführung von Baugruppen in die erste oder zweite Prozesskammer und an der zweiten Prozesskammereinrichtung eine zweite Handlingeinheit zur Abführung von Baugruppen aus der weiteren oder der zweiten weiteren Prozesskammer der zweiten Prozesskammereinrichtung angeordnet sind.

Zwischen der ersten und der weiteren Prozesskammer und/oder zwischen der zweiten und der zweiten weiteren Prozesskammer kann wenigstens ein Verschlusselement und/oder eine schleusenartige Verschlusseinrichtung angeordnet sein. Mit einer derartigen Verschlusseinrichtung wird eine Beeinflussung der sich nebeneinander angeordneten Prozesskammern (erste und weitere Prozesskammer bzw. zweite und zweite weitere Prozesskammer) bzw. deren Innenräume reduziert oder verhindert werden.

In einer weiteren optionalen Ausführungsform kann es beispielsweise vorgesehen sein, dass die Vorrichtung (a) eine Eingabeeinrichtung zur Eingabe einer Information an eine vorrichtungsseitige Steuereinheit und/oder (b) eine Ausgabeeinrichtung zur Ausgabe einer Information an eine Bedienperson und/oder an eine vorrichtungsseitige Steuereinheit umfasst. Durch die Eingabeeinheit kann z. B. eine (I) Steuerung und/oder Regelung der Prozessparametereinheit und/oder (II) eine Steuerung und/oder Regelung des Übergabemittels und/oder (III) eine Steuerung und/oder Regelung des Fördermittels erfolgen. Alternativ oder zusätzlich kann durch die Ausgabeeinrichtung beispielsweise eine (i) die Prozessparameter, (ii) die Prozessparametereinheit, (iii) die Position und/oder Ausrichtung des Übergabemittels und/oder (iv) die Position und/oder Ausrichtung des Fördermittels betreffende Information an einen Bediener der Vorrichtung und/oder an ein übergeordnetes Datensystem (z. B. ein Produktionsnetzwerk) angezeigt bzw. übermittelt werden.

Neben der Vorrichtung zum Löten betrifft die Erfindung auch ein Verfahren zum Betrieb einer hierin beschriebenen Vorrichtung zum Löten einer Baugruppe, umfassend folgende Verfahrensschritte: (a) Bereitstellen wenigstens einer Baugruppe, (b) Einbringen wenigstens einer Baugruppe in einen Innenraum einer Prozesskammer, (c) Durchführen eines Lötverfahrens in einem Innenraum wenigstens einer Prozesskammer, (d) Entnehmen der Baugruppe aus dem Innenraum der Prozesskammer nach Durchführung des Lötverfahrens. Das Bereitstellen der wenigstens einen Baugruppe kann hierbei beispielsweise eine Aufnahme einer Baugruppe aus einem System bzw. aus einer zuführenden Nachbaranlage umfassen. Das Entnehmen der wenigstens einen Baugruppe kann beispielsweise eine Übergabe der wenigstens einen Baugruppe an ein nachgelagertes System bzw. an eine aufnehmende Nachbaranlage umfassen.

Während der Durchführung des Lötverfahrens in einem Innenraum wenigstens einer Prozesskammer kann die wenigstens eine sich im Innenraum der Prozesskammer befindliche Baugruppe im Stillstand befinden, d. h. zumindest temporär oder gänzlich keine Relativbewegung zu der Prozesskammer ausführen.

Es ist möglich, dass die Durchführung des Lötverfahrens ein Erwärmen der wenigstens einen in dem Innenraum der Prozesskammer angeordneten Baugruppe umfasst, wobei nach einem Erwärmen der wenigstens einen Baugruppe die wenigstens eine Baugruppe in der Prozesskammer oder nach einer Verlagerung der wenigstens einen Baugruppe in eine weitere Prozesskammer einem Kühlprozess unterzogen wird. Beispielsweise wird die wenigstens eine Baugruppe in einer ersten Prozesskammer erwärmt und in einem unmittelbaren oder mittelbaren Anschluss an die Erwärmung in der ersten Prozesskammer zu einer weiteren Prozesskammer überführt und dort einer aktiven oder passiven Kühlung unterzogen.

Mit der vorliegenden Vorrichtung ist es möglich, dass mehrere Baugruppen, z. B. zwei, drei und/oder vier Baugruppen, gleichzeitig über die Fördereinrichtung, insbesondere das Fördermittel, und/oder über die Übergabeeinrichtung, insbesondere das Übergabemittel, verlagert werden. Alternativ oder zusätzlich können mehrere Baugruppen, z. B. zwei, drei und/oder vier Baugruppen, gleichzeitig innerhalb einer gemeinsamen Prozesskammer angeordnet sein und gleichzeitig zumindest abschnittsweise erwärmt und/oder gekühlt werden.

Es ist optional möglich, dass die Vorrichtung für eine Serienanwendung zum Löten der Baugruppen herangezogen wird. Typischerweise können mit der Vorrichtung mindestens 75, bevorzugt mindestens 150, besonders bevorzugt mindestens 220, höchst bevorzugt mindestens 350 Baugruppen pro Stunde gelötet werden. Die Anzahl der Baugruppen pro Stunde kann beispielsweise als PCBs/h angegeben werden. Diese Leistungsdaten können beispielsweise bei einer Verwendung von 4 als Öfen bzw. als Heizeinrichtungen verwendete Prozesskammern erreicht werden. Diese vier Öfen bzw. Heizeinrichtungen können mit jeweils angeschlossenen kühlenden Prozesskammern kombiniert bzw. gepaart sein. Die hierbei betrachteten Baugruppen können ein Eurokartenformat aufweisen, das typischerweise eine Länge von 230 mm bis 270 mm, insbesondere eine Länge von 250 mm, und eine Bereite von 175 mm bis 225 mm, insbesondere eine Breite von 200 mm, aufweisen.

Zumindest während der thermischen Beaufschlagung der wenigstens einen Baugruppe innerhalb der Prozesskammer kann die Baugruppe stillstehend vorliegen, d. h. keine Relativbewegung zu der Prozesskammer ausführen. Insbesondere dieses Konzept ermöglicht es selbst geringe Losgrößen, d. h. Losgrößen kleiner 100, bevorzugt Losgrößen kleiner 35, besonders bevorzugt Losgrößer kleiner 10, höchstbevorzugt eine Losgrößen gleich 1, unter wirtschaftlichen Bedingungen auszuführen bzw. einem Lötprozess zu unterziehen. Beispielsweise ist eine gleichzeitige Handhabung bzw. ein gleichzeitiges Löten von Baugruppen mit unterschiedlichen Losgrößen ermöglicht, hierbei können sich die Losgrößenunterschiede zwischen wenigstens zwei Baugruppe mindestens um den Faktor 4, bevorzugt mindestens um den Faktor 10, besonders bevorzugt mindestens um den Faktor 100, besonders bevorzugt mindestens um den Faktor 1000, unterscheiden.

Sämtliche Vorteile, Einzelheiten, Ausführungen und/oder Merkmale der erfindungsgemäßen Vorrichtung sind auf die erfindungsgemäßen Prozesskammereinrichtung und/oder auf das erfindungsgemäße Verfahren übertragbar bzw. anzuwenden.

Die Erfindung ist anhand von Ausführungsbeispielen in den Zeichnungen näher erläutert. Dabei zeigt:
- Fig. 1: eine Prinzipdarstellung einer Vorrichtung gemäß einem Ausführungsbeispiel in der Vorderansicht;
- Fig. 2: eine Prinzipdarstellung einer Vorrichtung gemäß Figur 1 in der Draufsicht;
- Fig. 3: eine Prinzipdarstellung einer Vorrichtung gemäß einem Ausführungsbeispiel in der Vorderansicht;
- Fig. 4: eine Prinzipdarstellung einer Vorrichtung gemäß Figur 3 in der Draufsicht;
- Fig. 5: eine Prinzipdarstellung einer Vorrichtung gemäß einem Ausführungsbeispiel in der Vorderansicht;
- Fig. 6: eine Prinzipdarstellung einer Vorrichtung gemäß einem Ausführungsbeispiel in der Draufsicht;
- Fig. 7: eine Prinzipdarstellung einer Vorrichtung gemäß einem Ausführungsbeispiel in der Draufsicht;
- Fig. 8: eine perspektivische Prinzipdarstellung einer Vorrichtung gemäß einem Ausführungsbeispiel;
- Fig. 9: eine perspektivische Prinzipdarstellung einer Vorrichtung gemäß Figur 8 in einer in Vorrichtungsteilgruppen zerlegten Darstellung;
- Fig. 10: eine perspektivische Prinzipdarstellung einer Handlingeinheit gemäß einem Ausführungsbeispiel;
- Fig. 11: eine Prinzipdarstellung eines Führungsmittels gemäß einem Ausführungsbeispiel in der Seitenansicht;
- Fig. 12: eine Prinzipdarstellung eines Führungsmittels gemäß einem Ausführungsbeispiel in der Seitenansicht;
- Fig. 13: eine Prinzipdarstellung einer Vorrichtung gemäß einem Ausführungsbeispiel in der Draufsicht;
- Fig. 14: eine Prinzipdarstellung einer Vorrichtung gemäß einem Ausführungsbeispiel in der Draufsicht;
- Fig. 15: eine perspektivische Prinzipdarstellung einer Vorrichtung gemäß einem Ausführungsbeispiel in einer in Vorrichtungsteilgruppen zerlegten Darstellung;
- Fig. 16: eine Prinzipdarstellung einer Vorrichtung gemäß einem Ausführungsbeispiel in der Draufsicht.

In den Figuren ist eine Vorrichtung 1 zum Löten, insbesondere zum Reflow-Löten, wenigstens einer Baugruppe 2 dargestellt. Die Baugruppe 2 umfasst dabei wenigstens zwei Bauteile 3, 3', wobei ein erstes Bauteil 3 als Leiterplatte und das zweite Bauteil 3' als elektronisches oder elektrische, auf der Leiterplatte zu verbindendes und fixierendes Bauelement ausgebildet ist, insbesondere ist das zweite Bauteil 3' ein SMD Bauteil. Im Bereich, insbesondere im unmittelbaren Kontaktbereich, der Bauteile 3, 3' ist ein Lötmittel 4, z. B. eine Lotpaste aufgebracht, welche sich unter thermischer Einwirkung bzw. bei Erwärmung verflüssigt und nach einer Abkühlphase aushärtet.

Die Vorrichtung 1 weist eine Prozesskammereinrichtung 5 auf, welche beispielsweise vier Prozesskammern 6, 6', 6", 6‴ zum Vorbereiten eines Lötverfahrens und/oder zum Durchführen eines Lötverfahrens und/oder zum Nachbereiten eines Lötverfahrens umfasst. Wenigstens zwei der Prozesskammern 6, 6', 6", 6‴ sind hierbei übereinander liegend und insbesondere stapelartig angeordnet. In der beispielhaften dargestellten Ausführungsform liegen die einzelnen Prozesskammern 6, 6', 6", 6‴ deckungsgleich übereinander, d. h. bei einer Projektion der Konturform bzw. -kanten auf eine Aufstellfläche 7 der Vorrichtung 1 fallend die Begrenzungslinien bzw. -kanten, zumindest in der Draufsicht, aufeinander.

Über eine Prozessparametereinheit 8 kann eine Steuerung und/oder Regelung von in einem Innenraum 9, 9', 9", 9‴ wenigstens einer Prozesskammer 6, 6', 6", 6‴ herrschenden Prozessparameter ausführbar sein, insbesondere ist der bzw. die im Innenraum 9, 9', 9", 9‴ der wenigstens einen Prozesskammer 6, 6', 6", 6‴ vorliegende Druck und/oder Temperatur und/oder Atmosphäre durch die Prozessparametereinheit 8 steuer- und/oder regelbar. Die Steuerung und/oder Regelung kann hierbei gezielt auf die wenigstens eine im Innenraum 9, 9', 9", 9‴ angeordnete Baugruppe 2 erfolgen. Hierbei ist die Prozessparametereinheit 8 über Leitungsverbindungen 36, 36', 36", 36‴ mit die Prozessparameter in dem jeweiligen Innenraum 9, 9', 9", 9‴ beeinflussenden Prozessparameterveränderungsmittels (nicht dargestellt), wie beispielsweise Heizeinrichtung und/oder Kühleinrichtung, verbunden. Über die Prozessparametereinheit 8 kann eine Regulierung der Prozessparameter in dem jeweiligen Innenraum 9, 9', 9", 9‴ der Prozesskammern 6, 6', 6", 6‴ gezielt auf die baugruppenspezifischen Anforderungen erfolgen. Die Prozessparametereinstellung bzw. -regulierung in einer ersten Prozesskammern 6, 6', 6", 6‴ kann unabhängig von den Prozessparametereinstellungen einer weiteren, und insbesondere unabhängig von den Prozessparametereinstellungen einer benachbarten Prozesskammern 6, 6', 6", 6‴, erfolgen. So kann es ermöglicht werden, dass über die Prozessparametereinheit 8 wenigstens ein erster, im Innenraum 9 der ersten Prozesskammer 6 vorliegender Prozessparameter unabhängig von einem zweiten, in einem Innenraum 9' einer zweiten Prozesskammer 6' herrschender Prozessparameter steuer- und/oder regelbar ist. Hierzu kann die jeweils die Prozessparameter der Prozesskammern 6, 6', 6", 6‴ einstellende Einrichtung entsprechend Leistungsfähig sein, sodass Querbeeinflussungen durch benachbarte Prozesskammern 6, 6', 6", 6‴ kompensierbar sind. Alternativ oder zusätzlich sind zwischen benachbarten Prozesskammern 6, 6', 6", 6‴ Isolationsmittel (nicht dargestellt) angeordnet, welche eine Querbeeinflussung, insbesondere hinsichtlich Druck und/oder Temperatur und/oder Atmosphäre von benachbarten Prozesskammern 6, 6', 6", 6‴ verhindert oder zumindest reduziert.

Die Prozesskammern 6, 6', 6", 6‴ weisen jeweils wenigstens eine Einführ- und/oder Ausführöffnung 10, 10', 11, 11' auf, über welche eine zu lötende und/oder gelötete Baugruppe 2 über eine Einführ- und/oder Ausführbewegung 12, 13 in die Prozesskammer 6, 6', 6", 6‴ einführbar bzw. aus der Prozesskammer 6, 6', 6", 6‴ ausführbar ist. Die Prozesskammern 6, 6', 6", 6‴ sind typischerweise mit Wandungen bzw. Wandabschnitten versehen, welche einen Innenraum 9, 9', 9", 9‴ der Prozesskammern 6, 6', 6", 6‴ definieren. In den Wandungen sind hierbei Öffnungen vorliegend, welche Einführ- und Ausführöffnungen 10, 10', 11, 11' bilden.

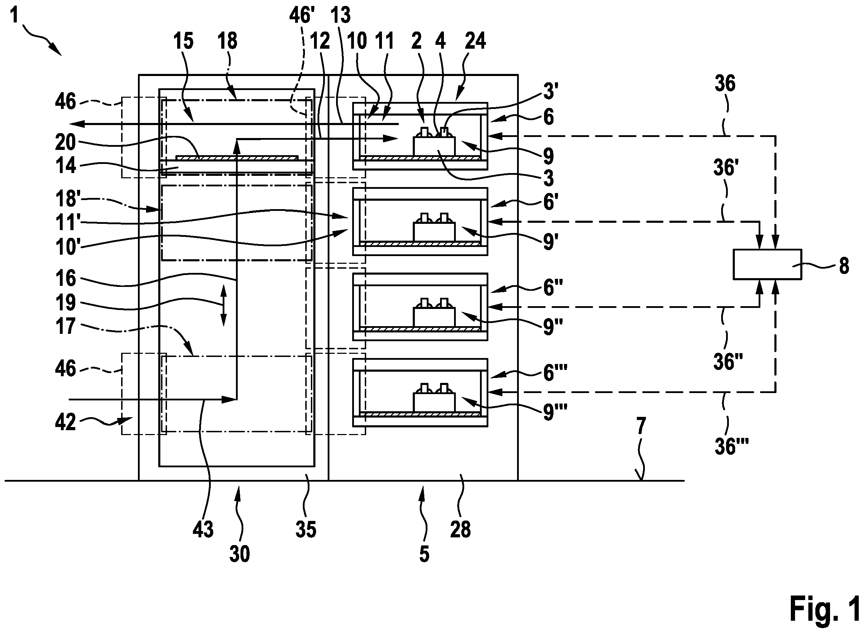

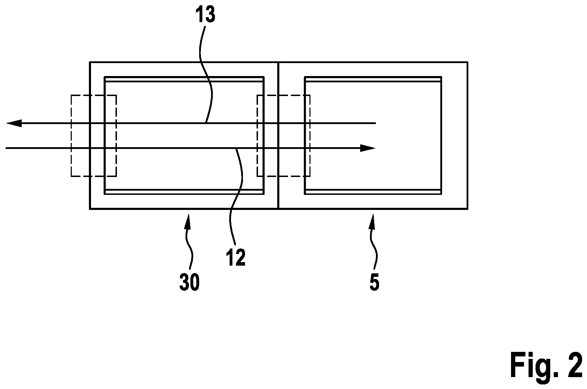

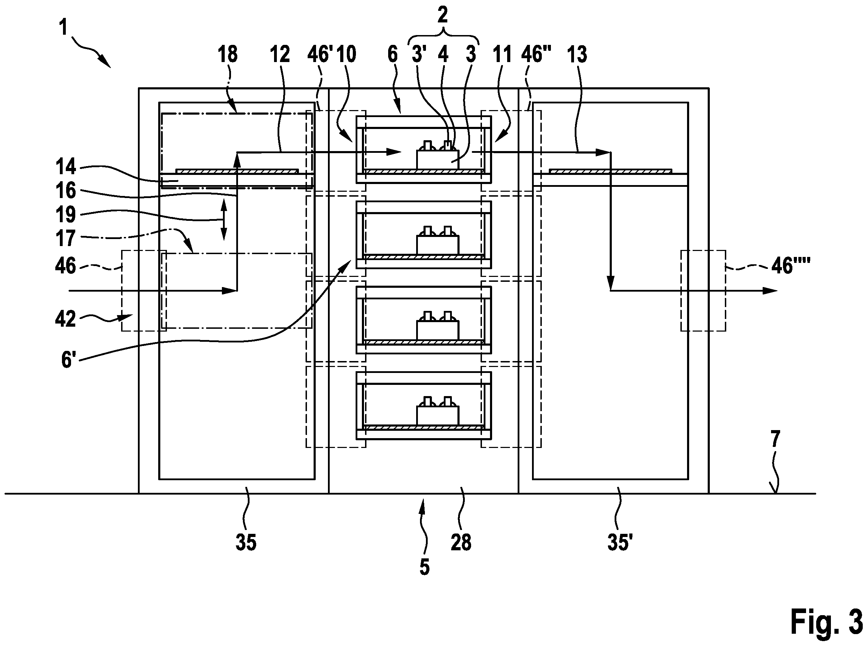

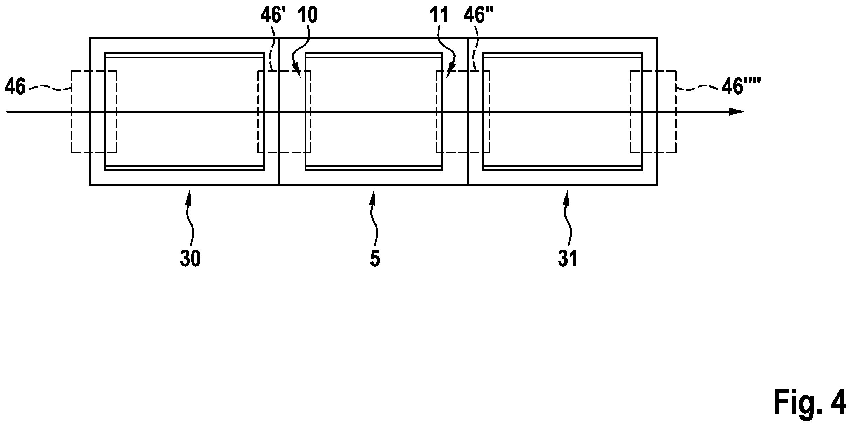

Wie beispielsweise in der Figur 1 oder 3 gezeigt kann die Einführbewegung 12 zum Einführen einer Baugruppe 2 in eine Prozesskammer 6 parallel zu der Ausführbewegung 13 zum Ausführen einer, insbesondere dieser, Baugruppe 2 aus dieser Prozesskammer 6 erfolgen, bevorzugt ist die Einführbewegung 12 in eine entgegengesetzte Richtung als die Ausführbewegung 13 gerichtet, vgl. Figuren 1 und 2. Alternativ können - wie in Figuren 3 bis 5 gezeigt - die Einführ- und Ausführbewegung 12, 13 parallel und in dieselbe Richtung orientiert bzw. gerichtet sein. Die erwähnte bzw. betrachtete Richtung der Einführ- und Ausführbewegung kann dabei eine in eine Horizontalebene projizierte Richtung und/oder eine in eine Vertikalebene, d. h. z. B. in eine senkrecht zur Aufstellfläche 7 verlaufende Vertikalebene, projizierte Richtung umfassen.

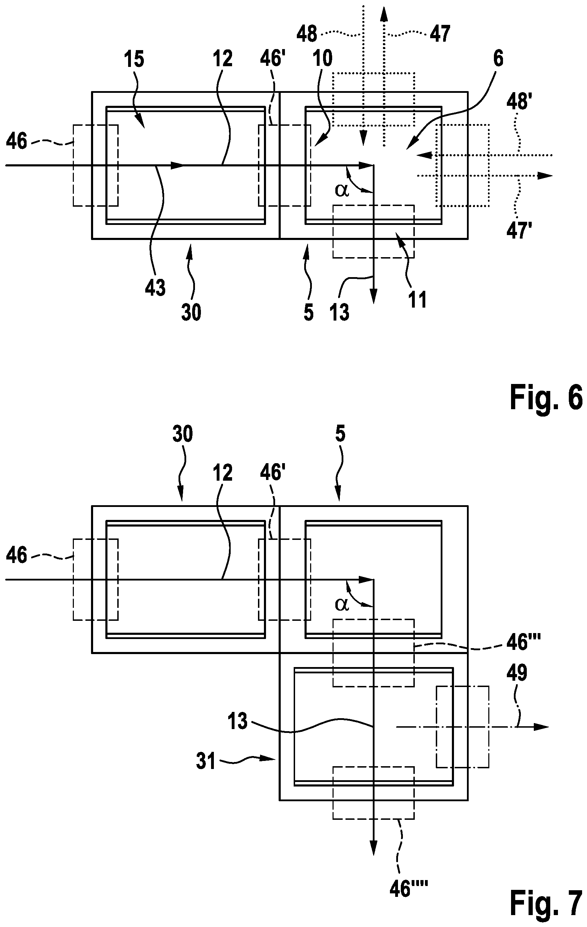

Beispielsweise kann die Einführbewegung 12 zum Einführen einer Baugruppe 2 in eine Prozesskammer 6 und die Ausführbewegung 13 zum Ausführen einer Baugruppe 2 aus dieser Prozesskammer 6 nicht parallel ausgerichtet sein. Hierbei kann die Einführ- und Ausführbewegung 12, 13 einen Winkel α einschließen. Der Winkel α kann beispielsweise 5° bis 175°, bevorzugt 30° bis 150°, höchst bevorzugt 60° bis 120° betragen, vgl. Figur 6, dort beträgt der beispielhaft dargestellte Winkel α 90° aus der Draufsicht. In Figur 6 sind ferner weitere alternative oder zusätzliche Eintritts- und/oder Austrittsbereiche zum Herausführen einer Baugruppe 2 aus dem Innenraum 9 einer Prozesskammer 6 dargestellt, diese alternativen oder zusätzlichen Eintritts- und/oder Austrittsbereiche bzw. die hierzu ausführbaren Einführ- und/oder Austrittsbewegungen sind mit dem gestrichelt dargestellten Pfeilen 47, 48 visualisiert.

Die wenigstens eine Einführ- und/oder Ausführöffnung 10, 10', 11, 11' wenigstens einer Prozesskammer 6, 6', 6", 6‴ kann durch wenigstens ein Verschlusselement (nicht dargestellt) zumindest abschnittsweise verschließbar sein, insbesondere verschließt das wenigstens eine Verschlusselement die Prozesskammer 6, 6', 6", 6‴ derart, dass eine im Innenraum 9, 9', 9", 9‴ der Prozesskammer 6, 6', 6", 6‴ vorliegende Temperatur und/oder Druck und/oder Atmosphäre zu einem Bereich außerhalb dieser Prozesskammer 6, 6', 6", 6‴ abgeschlossen bzw. abgetrennt wird.

Die Vorrichtung 1 weist zumindest eine wenigstens ein Fördermittel 14 umfassende Fördereinrichtung 15 zur Ausführung einer Förderbewegung 16, wobei vermittels dem Fördermittel14 eine zu lötenden und/oder gelöteten Baugruppe 2 von einer ersten Position 17 zu einer ersten, einer ersten Prozesskammer 6, 6', 6", 6‴ zugeordneten Übergabeposition 18 verlagerbar ist, insbesondere umfasst die Förderbewegung 16 des Fördermittels 14 eine Bewegungskomponente in Vertikalrichtung. Zumindest abschnittsweise kann die Förderbewegung 16 eine ausschließliche Bewegung in Vertikalrichtung aufweisen, vgl. Pfeil 19. Die erste Position 17 kann z. B. eine auf gleicher Höhe einer Einbringöffnung 42 zur Einbringung einer Baugruppe 2 in eine Fördereinrichtung 15 bzw. eine Handlingeinheit 30, 30', 31, 31' liegende Position 17 sein. Die Übergabeposition 18 ist in Figur 1 als die zur Übergabe an die erste Prozesskammer 6 zugeordnete Übergabeposition 18 definiert. Es ist möglich, dass jede Prozesskammer 6, 6', 6", 6‴ eine ihr zugeordnete, insbesondere in etwa oder exakt deren Höhenniveau entsprechende, Übergabeposition 18, 18' aufweist, welche durch eine entsprechende Bewegung des Fördermittels 14, beispielsweise entsprechend Pfeil 19, anfahrbar ist.

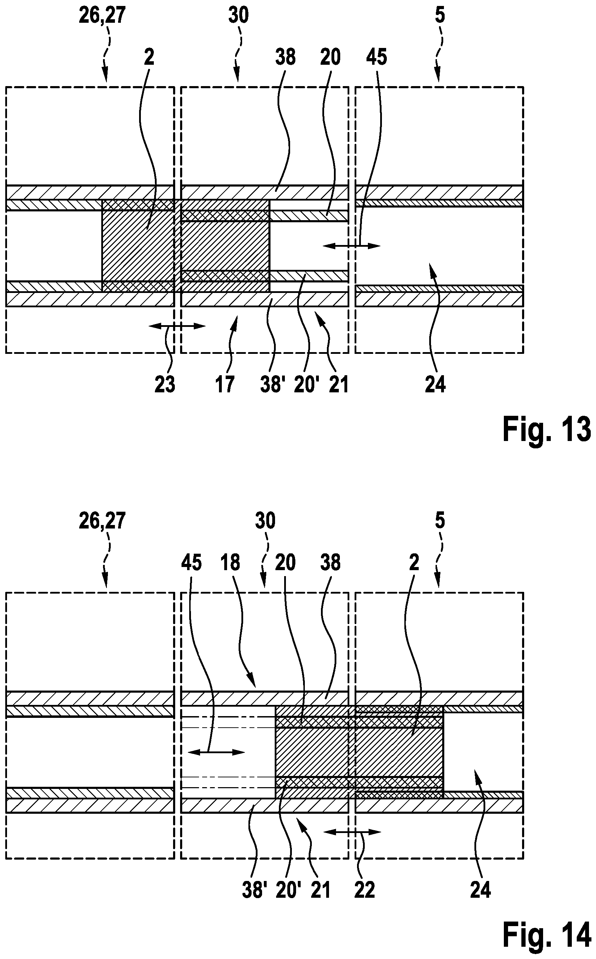

Ferner weist die Vorrichtung 1 zumindest eine wenigstens ein Übergabemittel 20, 20' umfassende Übergabeeinrichtung 21 zur zumindest abschnittsweisen Ausführung einer Übergabebewegung 22, 23 auf, wobei vermittels dem Übergabemittel 20, 20' wenigstens eine zu lötende und/oder gelötete Baugruppe 2 (a) von einer nicht-Arbeitsposition, insbesondere einer Übergabeposition 18, zu einer in dem Innenraum 9 einer ersten Prozesskammer 6 liegenden ersten Arbeitsposition 24 und/oder (b) von einer in dem Innenraum 9 einer ersten Prozesskammer 6 liegenden ersten Arbeitsposition 24 zu einer nicht-Arbeitsposition, insbesondere einer Übergabeposition 18 und/oder (c) von einer in dem Innenraum 9 einer ersten Prozesskammer 6 liegenden ersten Arbeitsposition 24 zu einer zweiten Arbeitsposition 25, insbesondere einer weiteren Prozesskammer 29, 29' verlagerbar ist, bevorzugt umfasst die Übergabebewegung 22, 23 eine Bewegungskomponente. Es kann - wie in den Figuren 13 und 14 dargestellt - eine ausschließliche horizontale erste und/oder zweite Übergabebewegung 22, 23 ausführbar sein. Hierbei können die Übergabemittel 20, 20' beispielsweise als Förderbänder ausgebildet sein.

Die erste Übergabebewegung 22 betrifft eine Übergabe der Baugruppe 2 von einer außerhalb bzw. neben einer Prozesskammer 6, 6', 6", 6‴ liegenden Übergabeposition 18 zu einem Innenraum 9, 9', 9", 9‴ der jeweiligen Prozesskammer 6, 6', 6", 6‴ oder umgekehrt. Die zweite Übergabebewegung 23 betrifft eine Übergabe der Baugruppe 2 von einer außerhalb der Vorrichtung 1 liegenden zuführende Nachbaranlage 26 an die Vorrichtung 1 und/oder eine Übergabe der Baugruppe 2 von der Vorrichtung 1 an eine aufnehmenden Nachbaranlage 27. Hierbei kann die Baugruppe 2 von einer der Vorrichtung 1 vorgelagerten Nachbaranlage 26 (nicht dargestellt) automatisiert durch die Einbringöffnung 42 in die erste Handlingeinheit 30 durch eine Einbringbewegung 43 eingebracht und beispielsweise zu einer ersten Position 17 verlagert werden.

Alternativ oder zusätzlich kann die Zuführung und/oder die Abführung einer Baugruppe 2 zu bzw. von der Vorrichtung 1 manuell durch einen Produktionsmitarbeiter erfolgen.

In der Figur 13 ist die zweite Übergabebewegung 23 dargestellt, in welcher von einer zuführenden Nachbaranlage 26 eine Zuführung und/oder Aufnahme der Baugruppe 2 zu der Handlingeinheit 30 bzw. zu der Fördereinrichtung 15 erfolgt. Sofern die Baugruppe 2 vollständig innerhalb der Handlingeinheit 30 bzw. innerhalb der Fördereinrichtung 15 aufgenommen wurde und ggf. eine einer Prozesskammer 6, 6', 6", 6‴ zugeordneten Übergabeposition 18 erreicht hat, erfolgt die erste Übergabebewegung 22 von der Handlingeinheit 30 bzw. der Fördereinheit 15 an die definierte Prozesskammer 6, 6', 6", 6‴ bzw. die Einbringung der Baugruppe 2 in den entsprechenden Innenraum 9, 9', 9", 9‴ der Prozesskammer 6, 6', 6", 6‴. Hierbei kann - wie beispielsweise in Figur 14 gezeigt - eine Bewegbarkeit des Übergabemittels 20, 20' derart vorgesehen sein, dass die Übergabemittel 20, 20' von der Handlingeinheit 30 bzw. von der Fördereinrichtung 15 herausragen bzw. zumindest abschnittsweise in den Innenraum 9, 9', 9", 9‴ einer Prozesskammer 6, 6', 6", 6‴ einragen oder eingreifen können. Beispielhaft sind die Übergabemittel 20, 20' als Förderkette und/oder als Förderband ausgebildet, auf welcher bzw. auf welchem die Baugruppe 2 aufliegt und durch entsprechende Bewegung der Förderkette resp. des Förderbandes die Baugruppe 2 eine Bewegung ausführt. Sofern das Übergabemittel 20, 20' zumindest abschnittsweise und temporär in den Innenraum 9, 9', 9", 9‴ der Prozesskammer 6, 6', 6", 6‴ einragt, ist es möglich, auf eine weitere Fördermöglichkeit für die Baugruppe 2 innerhalb des Innenraum 9, 9', 9", 9‴ der Prozesskammer 6, 6', 6", 6‴ zu verzichten.

Beispielshaft kann ein als Förderband ausgebildetes Übergabemittel 20, 20' horizontal beweglich gelagert sein, z. B. nach Art eines Auszugs. Damit kann auch ein als Auszug ausgebildetes und der Prozesskammereinrichtung 5, 5', 50, 50' zugeordnetes bzw. in oder an der Prozesskammereinrichtung 5, 5', 50, 50' angeordnetes oder ausgebildetes Übergabemittel 20, 20' manuell von einem Produktionsmitarbeiter (nicht dargestellt) mit einer Baugruppe 2 bestückt bzw. eine Baugruppe 2 von dem Übergabemittel 20, 20' entnommen werden.

Die Fördereinrichtung 15 und/oder die Übergabeeinrichtung 21 sind vorzugsweise in einer Handlingeinheit 30 angeordnet, wobei die Handlingeinheit 30 mit der Prozesskammereinrichtung 5 verbindbar oder verbunden ist. Wie in den Figuren 13 und 14 gezeigt, können zumindest Teile der Handlingeinheit 30 (z. B. die Übergabeeinrichtung 21) derart innerhalb der Handlingeinheit 30 gelagert sein, dass deren zumindest temporäres eingreifen bzw. sich erstrecken in das Volumen der Prozesskammereinrichtung 5, 5', 50, 50' ermöglicht wird.

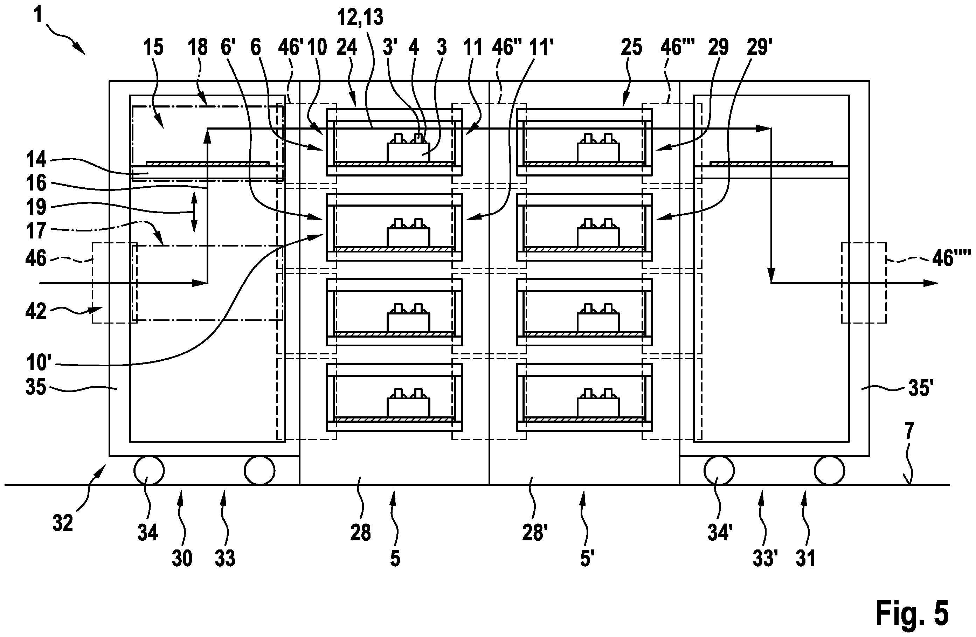

Die Handlingeinheit 30, 31 kann beispielsweise als mobiles Transportsystem 32, insbesondere als fahrerloses mobiles Transportsystem (FTS), ausgebildet sein, bevorzugt ist wenigstens eine gelötete oder zu lötende Baugruppe 2 durch das mobile Transportsystem 32 von einem vorrichtungsfernen erste Ort (nicht dargestellt) zu einem vorrichtungsnahen zweiten Ort 33, 33' transportierbar. Gemäß Fig. 5 kann das mobile Transportsystem 32 ein vermittels Räder 34, 34' auf einer Aufstellfläche 7 bewegbares Transportmedium sein, das zum Transport wenigstens (a) einer, vorzugsweise gleichzeitig mehrerer, Baugruppen 2, (b) wenigstens einer Fördereinrichtung 15 und/oder (c) wenigstens einer Übergabeeinrichtung 21 geeignet ist. Hierbei kann die Fördereinrichtung 15 und/oder die Übergabeeinrichtung 21 lösbar an dem mobilen Transportsystem 32 verbunden sein. Insbesondere ist die Fördereinrichtung 15 und/oder die Übergabeeinrichtung 21 derart an dem mobilen Transportsystem 32 verbunden bzw. befestigt, dass ein manuelles und/oder ein automatisiertes Trennen der Fördereinrichtung 15 und/oder der Übergabeeinrichtung 21 von dem mobilen Transportsystem 32 ausführbar ist, wobei vorzugsweise die Fördereinrichtung 15 und/oder die Übergabeeinrichtung 21 eingerichtet ist/sind nach einer Trennung von dem mobilen Transportsystem 32 als statische Einrichtung ihren bestimmungsgemäßen Gebrauch auszuführen.

In den Figuren sind die Handlingeinheit 30, 31 sowie die Prozesskammereinrichtung 5, 5' als jeweils separate Einheiten, die miteinander verbunden oder verbindbar sind, dargestellt. Hierzu ist die Handlingeinheit 30, 31 und die Prozesskammereinrichtung 5, 5' jeweils mit einem eigenen Gehäuse 28, 28', 35, 35' zumindest abschnittsweise umgeben bzw. eingehaust. Alternativ oder zusätzlich können zumindest Bestandteile der Handlingeinheit 30, 31 und/oder Bestandteile der Prozesskammereinrichtung 5, 5' zumindest abschnittsweise mit einem gemeinsamen Gehäuse (nicht dargestellt) umgeben bzw. in einem gemeinsamen Gehäuse platziert sein.

Gemäß der in den Figuren 3 bis 5 gezeigten Ausführungsformen können an wenigstens einer Prozesskammereinrichtung 5, 5' wenigstens zwei, jeweils zumindest eine Fördereinrichtung 15 und/oder eine Übergabeeinrichtung 21 umfassende, Handlingeinheiten 30, 31 verbunden sein. Hierbei kann beispielsweise die Zuführung einer zu lötenden oder gelöteten Baugruppe 2 zu der wenigstens einen Prozesskammer 6, 6', 6", 6‴ über eine erste Handlingeinheit 30 und eine Abführung der zu lötenden und/oder gelöteten Baugruppe 2 aus dieser oder einer weiteren Prozesskammer 6, 6', 6", 6‴, 29, 29' durch eine zweite Handlingeinheit 31 erfolgen.

Innerhalb wenigstens einer Prozesskammer 6, 6', 6", 6‴ und/oder an dem Fördermittel 14 und/oder an dem Übergabemittel 20, 20' kann wenigstens ein Haltemittel (nicht dargestellt) angeordnet sein, das eingerichtet ist, die zu lötende und/oder die gelötete Baugruppe 2 kraft- und/oder formschlüssig zu halten. Das Haltemittel kann als Greifer (nicht dargestellt) oder als Klemmeinrichtung (nicht dargestellt) ausgebildet sein. Die Funktion des Haltemittels kann beispielsweise zumindest temporär durch ein Führungsmittel 37, 37', 38, 38' ausgeführt werden, diese können beispielsweise zumindest temporär die Baugruppe 2 klemmend fixieren. Alternativ oder zusätzlich können separate Haltemittel vorgesehen sein, welche neben den Führungsmitteln 37, 37', 38, 38' eine zumindest temporär eine fixierende Funktion bzgl. der Baugruppe 2 innehaben. Beispielsweise kann eine manuelle oder automatisierte zumindest abschnittsweise Veränderung der Ausrichtung und/oder der Position der Haltemittel, insbesondere der Führungsmittel 37, 37', 38, 38', erfolgen, um eine Anpassung auf unterschiedlich geometrisch ausgebildete Baugruppe 2 und/oder um eine Anpassung an eine unterschiedliche Anzahl zeitlich parallel zu handhabender bzw. zu führender und/oder zu fixierender Baugruppen 2 zu ermöglichen.

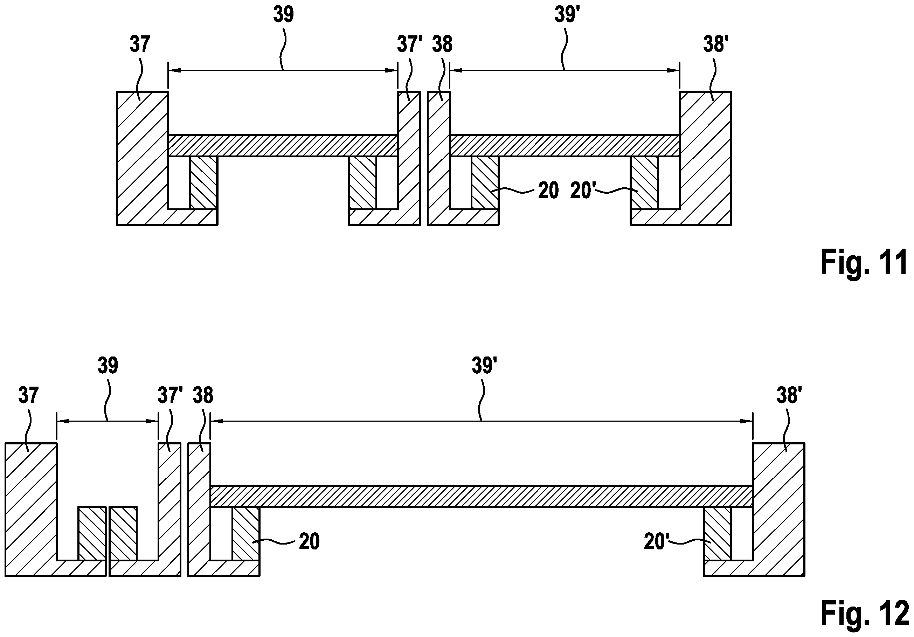

Alternativ oder zusätzlich kann gemäß der Figuren 11 und 12 ein Förder- und/oder Übergabemittel 14, 20, 20' vorgesehen sein, das oder die eingerichtet sind geometrisch unterschiedlich ausgebildete Baugruppen 2 und/oder Bauteile 3, 3'zu führen. Hierbei kann eine gezielte Anpassung der von förder- und/oder übergabemittelseitig vorgehaltenen Führungsmitteln 37, 37', 38, 38' auf die jeweilige Baugruppe 2 und/oder Bauteile 3, 3' ausführbar sein. Hierbei können vier, insbesondere paarweise konzipierte, Führungsmittel 37, 37', 38, 38' zum Einsatz kommen, wobei die Führungsmittel 37, 37', 38, 38' hinsichtlich deren Abstand 39, 39' veränderbar sind. Vorzugsweise lassen sich die Führungsmittel 37, 37', 38, 38' manuell oder automatisiert (z. B. rechnergesteuert) relativ zueinander bewegen, so dass deren Abstand 39, 39' gezielt veränderbar ist. In der Konfiguration gemäß Figur 11 können zwei Baugruppen 2 geführt werden. Gemäß Figur 12 ist ein erstes paar an Führungsmitteln 37, 37' in einer Parkstellung bzw. in einer Nichtgebrauchsstellung, wohingegen das zweite Paar an Führungsmitteln 38, 38' derart bewegt wurde, dass die Führungsmittel 38, 38' einen größeren Abstand 39' aufweisen und folglich eine größere Baugruppe 2 durch die Führungsmittel 38, 38' führbar ist. Zwischen den Führungsmitteln 37, 37', 38, 38' sind als Förderbänder ausgebildete Übergabemittel 20, 20' platziert. Auf diesen Übergabemittel 20, 20' liegt die Baugruppe 2 auf und kann entlang der Erstreckung der Übergabemittel 20, 20'bewegt werden. Optional kann auf den Übergabemitteln 20, 20' zwei, drei oder vier Baugruppen 2 gleichzeitig transportiert werden, d. h. es ist optional eine zwei, drei bzw. vierspurige Anordnung ausführbar. Hierbei kann die gleichzeitige Bewegung der Baugruppen 2 unter zumindest im Wesentlichen aufrechterhalten bleibenden Prozessparametern erfolgen.

Wie in Figur 5 dargestellt ist es in einer beispielhaften Ausführungsform vorgesehen, zumindest zwei, jeweils wenigstens zwei, insbesondere stapelartig, übereinander angeordnete Prozesskammern 6, 6', 6", 6‴, 29, 29'umfassende Prozesskammereinrichtungen 5, 5' miteinander zu verbinden, bevorzugt sind die Prozesskammern 6, 6', 6", 6‴ der ersten Prozesskammereinrichtung 5 und die Prozesskammern 29, 29' der zweiten Prozesskammereinrichtung 5' parallel zueinander ausgerichtet. Hierbei kann über an und/oder zwischen den Prozesskammereinrichtungen 5, 5' angeordnete Übergabeeinrichtungen 21 eine Übergabe einer Baugruppe 2 von einer Prozesskammer 6, 6', 6", 6‴ einer ersten Prozesskammereinrichtung 5 zu einer Prozesskammer 29, 29' einer zweiten Prozesskammereinrichtung 5' erfolgen, beispielsweise analog zu der in Figur 14 gezeigten Variante der Übergabeeinrichtung 21 bzw. der Übergabemittel 20, 20'. Beispielsweise werden die Prozesskammer 6, 6', 6", 6‴ der ersten Prozesskammereinrichtung 5 dazu verwendet um eine Baugruppe 2 innerhalb der Innenräume 9, 9', 9", 9‴ der ersten Prozesskammern 6, 6', 6", 6‴ zu erwärmen. Insbesondere erfolgt eine Erwärmung der Baugruppe 2 derart, dass ein Schmelzen des Lötmittels 4 erreicht wird. Die Baugruppe 2 kann im Anschluss an ein Verlassen der ersten Prozesskammern 6, 6', 6", 6‴ zu, den ersten Prozesskammern 6, 6', 6", 6‴ zugeordneten zweiten Prozesskammern 29, 29' der zweiten Prozesskammereinrichtung 5' transportiert werden. In den Innenräumen der zweiten Prozesskammern 29, 29' kann eine aktive und/oder gezielte Abkühlung der Baugruppen 2 erfolgen.

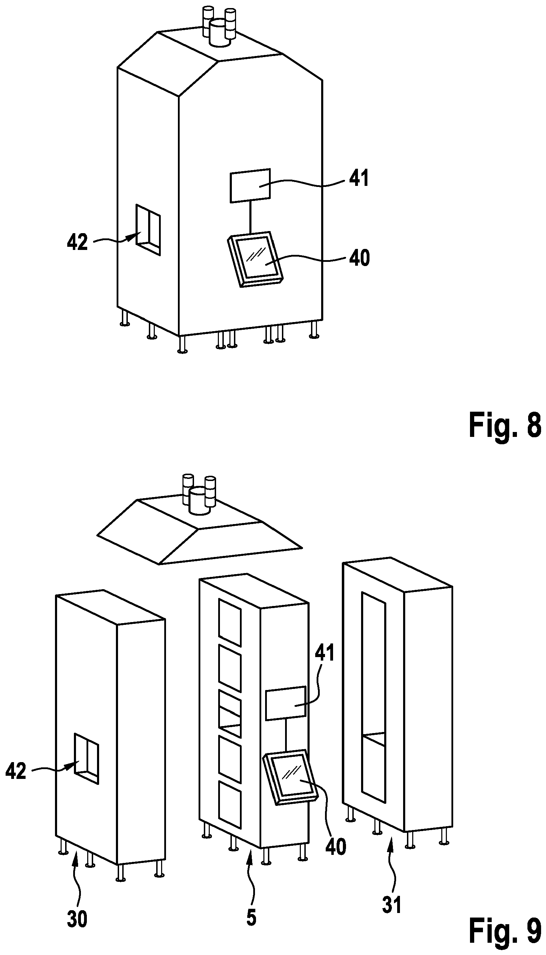

Die Vorrichtung kann wenigstens (a) eine Eingabeeinrichtung zur Eingabe einer Information an eine vorrichtungsseitige Steuereinheit 41, insbesondere eine Prozessparametereinheit 8, und/oder (b) eine Ausgabeeinrichtung zur Ausgabe einer Information an eine Bedienperson und/oder an eine vorrichtungsseitige Steuereinheit 41, insbesondere eine Prozessparametereinheit 8, umfassen. In der in den Figuren 8 und 9 gezeigt Ausführungsform ist ein Touchscreen 40 an der Vorrichtung 1 angeordnet, welcher die Funktion der Eingabeeinrichtung und/oder die Funktion der Ausgabeeinrichtung ausführen kann.

Ferner ist aus der in Figur 9 gezeigten Ausführungsform erkennbar, dass die erste und/oder die zweite Handlingeinheit 30, 31 und/oder wenigstens eine Prozesskammereinrichtung 5, 5' eine, insbesondere während des bestimmungsgemäßen Gebrauchs, hochgestellte oder hochkant Geometrie bzw. Ausrichtung aufweist. Hierbei kann die Handlingeinheit 30, 31 und/oder wenigstens eine Prozesskammereinrichtung 5, 5' einen zumindest im Wesentlichen quaderförmigen Aufbau aufweisen, der eine geringere Grundfläche als seine wenigstens eine Seitenfläche aufweist. Mit anderen Worten ist die maximale Erstreckung in der Ebene der Aufstellfläche 7 geringer, bevorzugt mindestens um die Hälfte geringer, besonders bevorzugt mindestens um ein Viertel geringer, als die maximale Erstreckung in Vertikalrichtung bzw. senkrecht zur Aufstellfläche 7.

Die Vorrichtung wird durch ein Verfahren zum Löten einer Baugruppe 2 betrieben, das folgende Verfahrensschritte vorsieht: (a) Bereitstellen einer Baugruppe 2, (b) Einbringen einer Baugruppe 2 in einen Innenraum 9, 9', 9", 9‴ einer Prozesskammer 6, 6', 6", 6‴, (c) Durchführen eines Lötverfahrens in einem Innenraum 9, 9', 9", 9‴ wenigstens einer Prozesskammer 6, 6', 6", 6‴, (d) Entnehmen der Baugruppe 2 aus dem Innenraum 9, 9', 9", 9‴ der Prozesskammer 6, 6', 6", 6‴ nach Durchführung des Lötverfahrens. Optional kann nach einem im Zuge der Durchführung des Lötverfahrens erfolgenden Erwärmen der in dem Innenraum 9, 9', 9", 9‴ der Prozesskammer 6, 6', 6", 6‴ angeordneten Baugruppe 2, die Baugruppe in der Prozesskammer 6, 6', 6", 6‴ oder nach einer Verlagerung der Baugruppe 2 in eine weitere Prozesskammer 29, 29' einem Kühlprozess unterzogen werden.

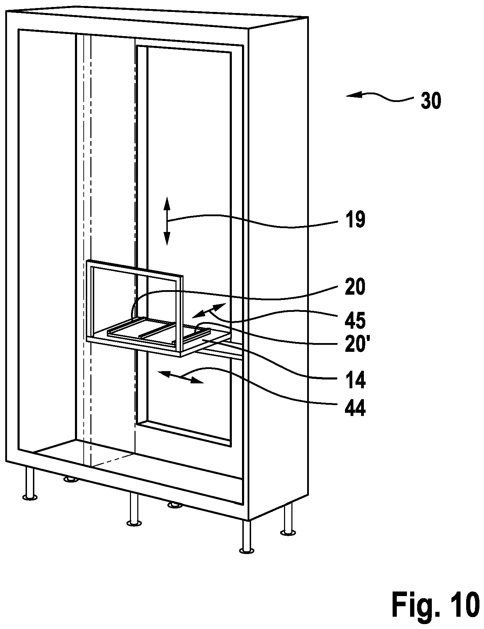

Figur 10 zeigt einen exemplarischen Aufbaueiner Handlingeinheit 30, 31. Hierbei ist erkennbar, dass eine als Fördereinrichtung 15 und Übergabeeinrichtung 21 ausgebildete Einheit vertikal entlang des Pfeils 19 und horizontal entlang des Pfeils 44, insbesondere quer zur Hauptförderrichtung 45 der Baugruppe 2 innerhalb der Vorrichtung 1 verlagerbar ist. Das Fördermittel 14 ist mit förderbandartigen Übergabemitteln 20, 20' versehen, welche eine Bewegung der auf den Übergabemitteln 20, 20' zu platzierenden Baugruppe 2 entlang der Hauptförderrichtung 45 der Baugruppe 2 innerhalb der Vorrichtung ermöglicht. Alternativ oder zusätzlich kann das Übergabemittel 20, 20' zumindest abschnittsweise, insbesondere in Hauptförderrichtung 45, auszugsartig ausziehbar ausgebildet sein und/oder einen Greifer umfassen.

Die Vorrichtung 1 kann eine Mehrzahl an Öffnungen zum Hindurchführen der Baugruppe 2 in oder aus einer Handlingeinheit 30, 31 und/oder in oder aus einer Prozesskammereinrichtung 5, 5' aufweisen. Hierzu kann an wenigstens einer Öffnung eine schleusenartige Verschlusseinrichtung (nicht dargestellt) vorgesehen sein. Die möglichen Öffnungen an der Handlingeinheit 30, 31 und/oder an der Prozesskammereinrichtung 5, 5' sind durch gestrichelte visualisierte Bereiche 46, 46', 46", 46‴, 46"" dargestellt. Mit anderen Worten bilden die Bereiche 46, 46', 46", 46‴, 46ʺʺ potentielle Orte für das jeweilige oder teilweise Vorsehen einer schleusenartigen Verschlusseinrichtung.

Gemäß Figur 7 ist dargestellt, dass eine erste Handlingeinheit 30 an einer ersten Seite der Prozesskammereinrichtung 5 und eine weitere Handlingeinheit 31 an einer ums Eck zu der ersten Handlingeinheit 30 angeordneten Seite der Prozesskammereinrichtung 5 angeordnet ist. Hierbei erfolgt eine Zuführung der Baugruppe 2 durch die erste Handlingeinheit 30 und die Abführung der Baugruppe 2 durch die zweite Handlingeinheit 31, wobei die Einführbewegung 12 zu der Ausführbewegung 13 einen Winkel α einschließt. Auch ist optional oder zusätzlich wie mit der Strichpunktpunktlinie (vgl. Pfeil 49) dargestellten Ausführung in Figur 7 gezeigt, ein insgesamt s-förmiger oder stufenartiger Bewegungsverlauf der Baugruppe 2 innerhalb der Vorrichtung ausführbar.

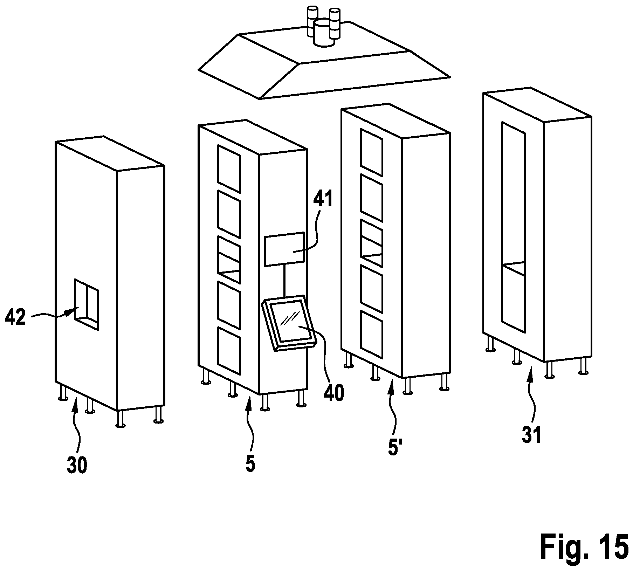

Figur 15 zeigt einen Aufbau bestehend aus zwei gleichartig, insbesondere identisch aufgebauten Prozesskammereinrichtung 5, 5', wobei nur eine erste Prozesskammereinrichtung 5 mit einem Touchscreen 40 ausgestattet ist. An die erste Prozesskammereinrichtung 5 ist eine erste Handlingeinheit 30 und an die zweite Prozesskammereinrichtung 5' ist eine zweite Handlingeinheit 31 angeschlossen bzw. verbunden. Dieser Aufbau ist mit dem in der Figur 5 gezeigten Aufbau vergleichbar, wobei die Handlingeinheiten 30, 31 der Vorrichtung 1 gemäß Figur 15 nicht als mobile Transportsysteme 32 ausgebildet sind.

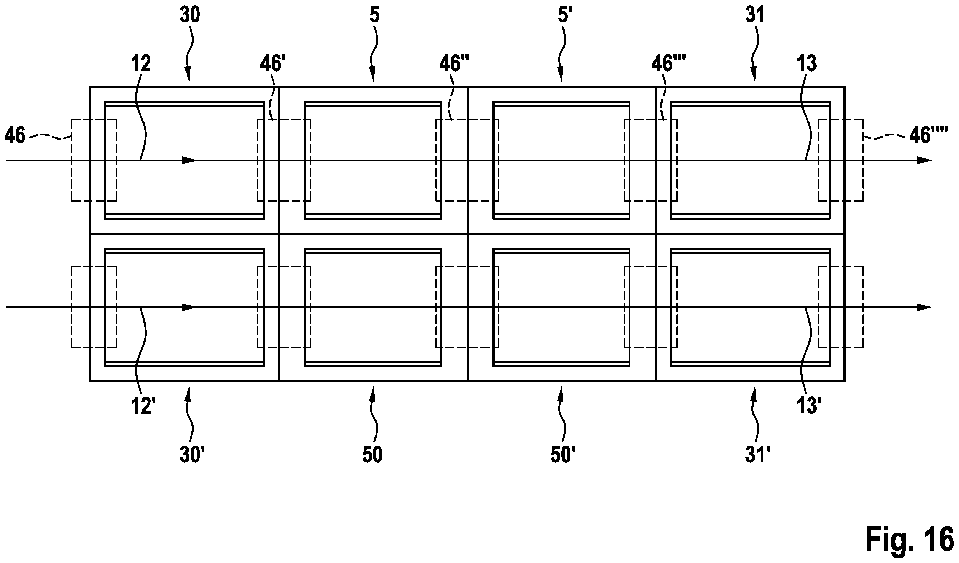

Figur 16 zeigt eine Draufsicht einer Vorrichtung 1 bestehend aus einer ersten Handlingeinheit 30 die mit einer ersten Prozesskammereinrichtung 5 verbunden ist und eine zweite Handlingeinheit 31, die mit einer zweiten Prozesskammereinrichtung 5' verbunden ist. Ferner ist parallel dazu eine weitere Handlingeinheit 30' mit einer weiteren Prozesskammereinrichtung 50 und eine weitere Handlingeinheit 31' mit einer weiteren Prozesskammereinrichtung 50' verbunden. Über die Einführ- und Ausführbewegung 12, 13 kann in einer ersten Linie und über die weitere Einführ- und Ausführbewegung 12', 13' kann in einer zweiten Linie parallel zu der ersten Linie eine Bewegung und/oder eine thermische Beaufschlagung innerhalb von Prozesskammer 6, 6', 6", 6‴, 29, 29' erfolgen. Damit wird exemplarisch dargestellt, dass die Prozesskammereinrichtung 5, 5', 50, 50' in Hauptförderrichtung 45 hintereinander und/oder nebeneinander zueinander anordenbar sind. Es kann damit eine Verbindung von mehreren schachbrettartig bzw. matrixartig zueinander angeordneten Prozesskammereinrichtungen 5, 5', 50, 50' und/oder Handlingeinheiten 30, 30', 31, 31' vorgesehen sein. Die Prozesskammereinrichtungen 5, 5', 50, 50' können mehrere, insbesondere eine identische Zahl an jeweils innerhalb einer Prozesskammereinrichtung 5, 5', 50, 50' übereinander angeordneten Prozesskammer 6, 6', 6", 6‴, 29, 29' umfassen.

### BEZUGSZEICHENLISTE

- 1: Vorrichtung
- 2: Baugruppe
- 3, 3': Bauteil
- 4: Lotmittel
- 5, 5': Prozesskammereinrichtung
- 6, 6', 6", 6‴: Prozesskammer
- 7: Aufstellfläche
- 8: Prozessparametereinheit
- 9, 9', 9", 9‴: Innenraum
- 10, 10': Einführöffnung von 6, 6', 6", 6‴
- 11, 11': Ausführöffnung von 6, 6', 6", 6‴
- 12: Einführbewegung
- 13: Ausführbewegung
- 14: Fördermittel
- 15: Fördereinrichtung
- 16: Förderbewegung
- 17: erste Position
- 18: Übergabeposition
- 19: Pfeil
- 20, 20': Übergabemittel
- 21: Übergabeeinrichtung
- 22: erste Übergabebewegung
- 23: zweite Übergabebewegung
- 24: erste Arbeitsposition
- 25: zweite Arbeitsposition
- 26: zuführende Nachbaranlage
- 27: abführende Nachbaranlage
- 28, 28': Gehäuse von 5, 5'
- 29, 29': weitere Prozesskammer
- 30, 30': erste Handlingeinheit
- 31, 31': zweite Handlingeinheit
- 32: mobiles Transportsystem
- 33: vorrichtungsnaher Ort
- 34, 34': Rad
- 35, 35': Gehäuse von 30, 31
- 36, 36', 36", 36‴: Leitungsverbindung
- 37, 37': Führungsmittel
- 38, 38': Führungsmittel
- 39, 39': Abstand
- 40: Touchscreen
- 41: Steuereinheit
- 42: Einbringöffnung
- 43: Einbringbewegung
- 44: Pfeil
- 45: Hauptförderrichtung
- 46, 46', 46", 46‴, 46ʺʺ: Öffnung
- 47, 47', 47": Pfeil
- 48, 48': Pfeil
- 49: Pfeil
- 50, 50': dritte, vierte Prozesskammereinrichtung

## Patentansprüche

1. Vorrichtung (1) zum Löten, insbesondere zum Reflow-Löten, wenigstens einer Baugruppe (2), aufweisend eine Prozesskammereinrichtung (5, 5', 50, 50'), umfassend wenigstens zwei Prozesskammern (6, 6', 6", 6‴) zum Vorbereiten eines Lötverfahrens und/oder zum Durchführen eines Lötverfahrens und/oder zum Nachbereiten eines Lötverfahrens, wobei die wenigstens zwei Prozesskammern (6, 6', 6", 6‴), insbesondere stapelartig, übereinander angeordnet sind, wobei die Vorrichtung (1) eine Handlingeinheit (30) aufweist, welche eine Übergabeeinrichtung (21) umfasst und die wenigstens ein Übergabemittel (20, 20') umfassende Übergabeeinrichtung (21) zur Ausführung einer Übergabebewegung (22, 23) vorgesehen ist, wobei vermittels dem Übergabemittel (20, 20') wenigstens eine zu lötende und/oder gelötete Baugruppe (2)
- von einer nicht-Arbeitsposition, insbesondere einer Übergabeposition (18), zu einer in dem Innenraum (9) einer ersten Prozesskammer (6) liegenden ersten Arbeitsposition (24) und/oder
- von einer in dem Innenraum (9) einer ersten Prozesskammer (6) liegenden ersten Arbeitsposition (24) zu einer nicht-Arbeitsposition, insbesondere einer Übergabeposition (18) und/oder
- von einer in dem Innenraum (9) einer ersten Prozesskammer (6) liegenden ersten Arbeitsposition (24) zu einer zweiten Arbeitsposition (25) verlagerbar ist, wobei
das Übergabemittel (20, 20') zumindest abschnittsweise und temporär in den Innenraum (9) der Prozesskammer (6, 6', 6", 6‴) einragbar ist,
**dadurch gekennzeichnet dass**,
- die Prozesskammereinrichtung (5, 5', 50, 50') auf einem ersten Seitenabschnitt und die Handlingeinheit (30) auf einem zweiten Seitenabschnitt der Vorrichtung (1) angeordnet sind, wobei die Vorrichtung (1) eingerichtet ist, dass eine Einbringung von zu lötenden oder gelöteten Baugruppen von einem außerhalb der Vorrichtung (1) befindlichen Ort in die Handlingeinheit (30) und ein Ausführen von gelöteten Baugruppen aus der Handlingeinheit (30) an einen außerhalb der Vorrichtung (1) befindlichen Bestimmungsort ausschließlich über den zweiten Seitenabschnitt der Vorrichtung (1) erfolgt.

2. Vorrichtung (1) nach Anspruch 1, **dadurch gekennzeichnet, dass** durch wenigstens eine Prozessparametereinheit (8) eine Steuerung- und/oder Regelung von in einem Innenraum (9, 9', 9", 9"') wenigstens einer Prozesskammer vorliegenden Prozessparameter ausführbar ist, insbesondere ist der bzw. die im Innenraum (9, 9', 9", 9‴) der wenigstens einen Prozesskammer vorliegende Druck und/oder Temperatur und/oder Atmosphäre durch die Prozessparametereinheit (8) steuer- und/oder regelbar.

3. Vorrichtung (1) nach einem der vorhergehenden Ansprüche, **dadurch gekennzeichnet, dass** die Prozesskammern (6, 6', 6", 6"') jeweils wenigstens eine Einführ- und/oder Ausführöffnung (10, 10', 11, 11') aufweisen, über welche eine zu lötende und/oder gelötete Baugruppe (2) über eine Einführ- und/oder Ausführbewegung (12, 13) in die Prozesskammer (6, 6', 6", 6‴) einführbar bzw. aus der Prozesskammer (6, 6', 6", 6‴) ausführbar ist, bevorzugt ist die Einführbewegung (12) zum Einführen einer Baugruppe (2) in eine Prozesskammer (6, 6', 6", 6‴) parallel zu der Ausführbewegung (13) zum Ausführen einer Baugruppe (2) aus dieser Prozesskammer (6, 6', 6", 6‴) erfolgt, bevorzugt ist die Einführbewegung (12) in die entgegengesetzte Richtung als die Ausführbewegung (13) gerichtet.

4. Vorrichtung (1) nach Anspruch 3, **dadurch gekennzeichnet, dass** die Einführbewegung (12) zum Einführen einer Baugruppe (2) in eine Prozesskammer (6, 6', 6", 6‴) und die Ausführbewegung (13) zum Ausführen einer Baugruppe (2) aus dieser Prozesskammer (6, 6', 6", 6‴) nicht parallel ausgerichtet sind.

5. Vorrichtung (1) nach einem der Ansprüche 3 bis 4, **dadurch gekennzeichnet, dass** die wenigstens eine Einführ- und/oder Ausführöffnung (12, 13) wenigstens einer Prozesskammer (6, 6', 6", 6‴) durch wenigstens ein Verschlusselement zumindest abschnittsweise verschließbar ist bzw. sind, insbesondere verschließt das wenigstens eine Verschlusselement die Prozesskammer (6, 6', 6", 6‴) derart, dass eine im Innenraum (9, 9', 9", 9‴) der Prozesskammer (6, 6', 6", 6‴) vorliegende Temperatur und/oder Druck und/oder Atmosphäre zu einem Bereich außerhalb dieser Prozesskammer (6, 6', 6", 6‴) abgeschlossen wird.

6. Vorrichtung (1) nach einem der vorhergehenden Ansprüche, **gekennzeichnet durch** zumindest eine wenigstens ein Fördermittel (14) umfassende Fördereinrichtung (15) zur Ausführung einer Förderbewegung (16), wobei vermittels dem Fördermittel (14) eine zu lötenden und/oder gelöteten Baugruppe (2) von einer ersten Position zu einer ersten, einer ersten Prozesskammer (6) zugeordneten Übergabeposition (18) verlagerbar ist, insbesondere umfasst die Förderbewegung (16) des Fördermittels (14) eine Bewegungskomponente in Vertikalrichtung.

7. Vorrichtung (1) nach einem der vorhergehenden Ansprüche, **dadurch gekennzeichnet, dass** die Übergabebewegung (22, 23) eine Bewegungskomponente in Horizontalrichtung umfasst.

8. Vorrichtung (1) nach Anspruch 6 oder 7, **dadurch gekennzeichnet, dass** die Fördereinrichtung (15) und/oder die Übergabeeinrichtung (21) in einer Handlingeinheit (30, 30', 31, 31') angeordnet ist bzw. sind, wobei die Handlingeinheit (30, 30', 31, 31') mit der Prozesskammereinrichtung (5, 5', 50, 50') verbindbar oder verbunden ist.

9. Vorrichtung (1) nach Anspruch 8, **dadurch gekennzeichnet, dass** die Handlingeinheit (30, 30', 31, 31') als mobiles Transportsystem (32), insbesondere als fahrerloses mobiles Transportsystem (FTS) ausgebildet ist, bevorzugt ist wenigstens eine gelötete oder zu lötende Baugruppe (2) durch das mobile Transportsystem (32) von einem vorrichtungsfernen ersten Ort zu einem vorrichtungsnahen zweiten Ort (33) transportierbar.

10. Vorrichtung (1) nach Anspruch 8 oder 9, **dadurch gekennzeichnet, dass** die Bestandteile der Handlingeinheit (30, 30', 31, 31') und/oder die Bestandteile der Prozesskammereinrichtung (5, 5', 50, 50') zumindest abschnittsweise mit einem gemeinsamen Gehäuse umgeben sind.

11. Vorrichtung (1) nach einem der Ansprüche 6 bis 10, **dadurch gekennzeichnet, dass** an der Prozesskammereinrichtung (5, 5', 50, 50') wenigstens zwei, jeweils zumindest eine Fördereinrichtung (15) und/oder eine Übergabeeinrichtung (21) umfassende Handlingeinheiten (30, 30', 31, 31) verbindbar oder verbunden sind, bevorzugt erfolgt die Zuführung einer zu lötenden oder gelöteten Baugruppe (2) zu der wenigstens einen Prozesskammer (6, 6', 6", 6‴) über eine erste Handlingeinheit (30, 30') und eine Abführung der zu lötenden und/oder gelöteten Baugruppe (2) aus dieser Prozesskammer (6, 6', 6", 6‴) durch eine zweite Handlingeinheit (31).

12. Vorrichtung (1) nach einem der vorhergehenden, **gekennzeichnet durch** zumindest zwei, jeweils wenigstens zwei, insbesondere stapelartig, übereinander angeordnete Prozesskammern (6, 6', 6", 6"', 29, 29') umfassende Prozesskammereinrichtungen (5, 5', 50, 50') miteinander verbunden sind, bevorzugt sind die Prozesskammern (6, 6', 6", 6‴) der ersten Prozesskammereinrichtung (5) und die Prozesskammern (29, 29') der zweiten Prozesskammereinrichtung (5') parallel zueinander ausgerichtet.

13. Verfahren zum Betrieb einer Vorrichtung (1) zum Löten einer Baugruppe (2) nach einem der vorhergehenden Ansprüche, umfassend folgende Verfahrensschritte:
- Bereitstellen wenigstens einer Baugruppe (2),
- Einbringen wenigstens einer Baugruppe (2) in einen Innenraum (9, 9', 9", 9‴) einer Prozesskammer (6, 6', 6", 6‴),
- Durchführen eines Lötverfahrens in einem Innenraum (9, 9', 9", 9‴) wenigstens einer Prozesskammer (6, 6', 6", 6‴),
- Entnehmen der wenigstens einen Baugruppe (2) aus dem Innenraum (9, 9', 9", 9‴) der Prozesskammer (6, 6', 6", 6‴) nach Durchführung des Lötverfahrens, wobei zumindest eine wenigstens ein Übergabemittel (20, 20') umfassende Übergabeeinrichtung (21) zur Ausführung einer Übergabebewegung (22, 23), wobei
- vermittels dem Übergabemittel (20, 20') wenigstens eine zu lötende und/oder gelötete Baugruppe (2)
-- von einer nicht-Arbeitsposition, insbesondere einer Übergabeposition (18), zu einer in dem Innenraum (9) einer ersten Prozesskammer (6) liegenden ersten Arbeitsposition (24) und/oder
-- von einer in dem Innenraum (9) einer ersten Prozesskammer (6) liegenden ersten Arbeitsposition (24) zu einer nicht-Arbeitsposition, insbesondere einer Übergabeposition (18) und/oder
-- von einer in dem Innenraum (9) einer ersten Prozesskammer (6) liegenden ersten Arbeitsposition (24) zu einer zweiten Arbeitsposition (25)
verlagerbar ist, wobei
- das Übergabemittel (20, 20') zumindest abschnittsweise und temporär in den Innenraum (9) der Prozesskammer (6, 6', 6", 6‴) einragt.

14. Verfahren nach Anspruch 13, **dadurch gekennzeichnet, dass** die Durchführung des Lötverfahrens ein Erwärmen der wenigstens einen in dem Innenraum (9, 9', 9", 9‴) der Prozesskammer (6, 6', 6", 6‴) angeordneten Baugruppe (2) umfasst, wobei nach einem Erwärmen der wenigstens einen Baugruppe (2) die wenigstens eine Baugruppe (2) in der Prozesskammer (6, 6', 6", 6‴) oder nach einer Verlagerung der wenigstens einen Baugruppe (2) in eine weitere Prozesskammer (6, 6', 6", 6‴, 29, 29') einem Kühlprozess unterzogen wird.

## Claims

1. Device (1) for soldering, in particular for reflow soldering, at least one assembly (2), comprising a process chamber device (5, 5', 50, 50'), comprising at least two process chambers (6, 6', 6", 6‴) for preparing a soldering process and/or for carrying out a soldering process and/or for post-processing a soldering process, wherein the at least two process chambers (6, 6', 6", 6"'), in particular stack-like, are arranged on top of each other, wherein the device (1) comprises a handling unit (30) comprising a transfer device (21) and which comprises at least one transfer means (20, 20') comprising transfer means (21) for carrying out a transfer movement (22, 23), wherein at least one soldered and/or soldered assembly (2) is provided by means of the transfer means (20, 20')
- from a non-working position, in particular a transfer position (18), to a first working position (24) located in the interior (9) of a first process chamber (6) and/or
- from a first working position (24) lying in the interior (9) of a first process chamber (6) to a non-working position, in particular a transfer position (18) and/or
- from a first working position (24) located in the interior (9) of a first process chamber (6) to a second working position (25)
It is relocated, where
the transfer means (20, 20') can be protruded at least in sections and temporarily into the interior (9) of the process chamber (6, 6', 6", 6‴), **characterized in that**
- the process chamber device (5, 5', 50, 50') are arranged on a first side portion and the handling unit (30) on a second side portion of the device (1), wherein the device (1) is arranged that an introduction of soldered or soldered assemblies from a location outside the device (1) into the handling unit (30) and an execution of soldered assemblies from the handling unit (30) to a destination outside the device (1) takes place exclusively via the second side portion of the device (1).

2. Device (1) according to claim 1, **characterized in that** at least one process parameter unit (8) enables control and/or regulation of process parameters present in an interior (9, 9', 9", 9‴) of at least one process chamber, in particular, the pressure and/or temperature and/or atmosphere present in the interior (9, 9', 9", 9‴) of at least one process chamber is controllable and/or adjustable by the process parameter unit (8).

3. Device (1) according to any one of the preceding claims, **characterized in that** the process chambers (6, 6', 6", 6"') each have at least one insertion and/or export opening (10, 10', 11, 11') through which a soldered and/or soldered assembly (2) can be inserted and/or exported via an insertion and/or export movement (12, 13) into the process chamber (6, 6', 6", 6‴) or exported from the process chamber (6, 6', 6", 6‴) respectively, preferably the insertion movement (12) for introducing an assembly (2) into a process chamber (6, 6', 6", 6"') is carried out parallel to the execution movement (13) for executing an assembly (2) from this process chamber (6, 6', 6", 6"'), preferably the insertion movement (12) is directed in the opposite direction as the execution movement (13).

4. Device (1) according to claim 3, **characterized in that** the insertion movement (12) for inserting an assembly (2) into a process chamber (6, 6', 6", 6"') and the execution movement (13) for executing an assembly (2) from this process chamber (6, 6', 6", 6"') are not aligned in parallel.

5. Device (1) according to any one of claims 3 to 4, **characterized in that** the at least one insertion and / or discharge opening (12, 13) at least one process chamber (6, 6', 6", 6‴) is or are closed by at least one closure element at least in part, in particular, the at least one closure element closes the process chamber (6, 6', 6", 6‴) such that a temperature and / or pressure and / or atmosphere present in the interior (9, 9', 9", 9‴) of the process chamber (6, 6',6", 6‴) to a region outside this process chamber (6, 6', 6", 6‴) is closed.

6. Device (1) according to one of the preceding claims, **characterized by** at least one conveying means (14) comprising conveying means (15) for carrying out a conveying movement (16), wherein by means of the conveying means (14) a soldered and / or soldered assembly (2) from a first position to a first, a first process chamber (6) associated transfer position (18) is relocable, in particular, the conveying movement (16) of the conveying means (14) comprises a movement component in the vertical direction.

7. Device (1) according to one of the preceding claims, **characterized in that** the transfer movement (22, 23) comprises a movement component in the horizontal direction.

8. Device (1) according to claim 6 or 7, **characterized in that** the conveying device (15) and / or the transfer device (21) is arranged in a handling unit (30, 30', 31, 31'), wherein the handling unit (30, 30', 31, 31') is connected or connected to the process chamber device (5, 5', 50, 50').

9. Device (1) according to claim 8, **characterized in that** the handling unit (30, 30', 31, 31') is designed as a mobile transport system (32), in particular as a driverless mobile transport system (FTS), preferably at least one soldered or to be soldered assembly (2) is transportable by the mobile transport system (32) from a device-remote first place to a device-near second place (33).

10. Device (1) according to claim 8 or 9, **characterized in that** the components of the handling unit (30, 30', 31, 31') and / or the components of the process chamber device (5, 5', 50, 50') are at least partially surrounded by a common housing.

11. Device (1) according to any one of claims 6 to 10, **characterized in that** at least two, each at least one conveying device (15) and/or a transfer device (21) comprising handling units (30, 30', 31, 31') are connected or connected to the process chamber device (5, 5', 50, 50'), preferably the supply of a soldered or soldered assembly (2) to which at least one process chamber (6, 6', 6", 6‴) via a first handling unit (30, 30') and a discharge of the soldered and/or soldered assembly (2) from this process chamber (6, 6', 6", 6‴) by a second handling unit (31).

12. Device (1) according to one of the preceding, **characterized by** at least two, each at least two, in particular stack-like, superimposed process chambers (6, 6', 6", 6‴, 29, 29') comprising process chamber devices (5, 5', 50, 50') are connected to each other, preferably the process chambers (6, 6', 6", 6‴) of the first process chamber device (5) and the process chambers (29, 29') of the second process chamber device (5') are aligned parallel to each other.

13. Method for operating a device (1) for soldering an assembly (2) according to any one of the preceding claims, comprising the following process steps:
- providing at least one assembly (2),
- insertion of at least one assembly (2) into an interior (9, 9', 9", 9"') of a process chamber (6, 6', 6", 6‴),
- performing a soldering process in an interior (9, 9', 9", 9‴) of at least one process chamber (6, 6', 6", 6‴),
- extracting at least one assembly (2) from the interior (9, 9', 9", 9‴) of the process chamber (6, 6', 6", 6‴) after carrying out the soldering process, wherein
at least one transfer means (20, 20) comprising transfer means (21) for carrying out a transfer movement (22, 23), wherein
- by means of the transfer means (20, 20) at least one assembly to be soldered and/or soldered (2)
-- from a non-working position, in particular a transfer position (18), to a first working position (24) located in the interior (9) of a first process chamber (6) and/or
-- from a first working position (24) lying in the interior (9) of a first process chamber (6) to a non-working position, in particular a transfer position (18) and/or
-- from a first working position (24) located in the interior (9) of a first process chamber (6) to a second working position (25)
It is relocated, where
- the transfer means (20, 20') protrudes at least partially and temporarily into the interior (9) of the process chamber (6, 6', 6", 6‴).

14. The method of claim 13, **characterized in that** the conduction of the soldering process comprises heating the at least one assembly (2) arranged in the interior (9, 9', 9", 9‴) of the process chamber (6, 6', 6", 6"') wherein, after heating the at least one assembly (2), the at least one assembly (2) in the process chamber (6, 6', 6", 6"') or after relocating the at least one assembly (2) to a further process chamber (6, 6', 6", 6‴,29, 29') is subjected to a cooling process.

## Revendications

1. Dispositif (1) de brasage, en particulier de brasage par refusion, comprenant au moins un assemblage (2), comportant un dispositif de chambre de procédé (5, 5', 50, 50'), comprenant au moins deux chambres de procédé (6, 6', 6", 6"') pour la préparation d'un procédé de brasage et/ou l'exécution d'un procédé de brasage et/ou le suivi d'un procédé de brasage, le dispositif (1) comportant une unité de manutention (30) comprenant un dispositif de transfert (21) comprenant au moins un moyen de transfert (20, 20') pour l'exécution d'un mouvement de transfert (22, 23), le dispositif (1) comprenant au moins un dispositif de transfert (20, 20') comprenant au moins un dispositif de transfert (20, 20') pour l'exécution d'un mouvement de transfert (22, 23) avec au moins un assemblage à souder et/ou à souder (2) par l'intermédiaire du dispositif de transfert (20, 20')
- d'une position non de travail, en particulier d'une position de transfert (18), à une première position de travail (24) située à l'intérieur (9) d'une première chambre de traitement (6) et/ou
- d'une première position de travail (24) située à l'intérieur (9) d'une première chambre de traitement (6) à une position de non-travail, en particulier une position de transfert (18) et/ou
- d'une première position de travail (24) située à l'intérieur (9) d'une première chambre de traitement (6) à une deuxième position de travail (25)
Il est déplaçable,
le moyen de transfert (20, 20') peut être encastré au moins par sections et temporairement dans l'habitacle (9) de la chambre de traitement (6, 6', 6", 6"'), **caractérisé en ce que** :
- le dispositif de la chambre de traitement (5, 5', 50, 50') est placé sur une première section latérale et l'unité de manutention (30) sur une deuxième section latérale du dispositif (1), le dispositif (1) étant prévu pour permettre l'introduction d'ensembles à souder ou à braser d'un endroit situé à l'extérieur du dispositif (1) dans l'unité de manutention (30) et l'acheminement d'ensembles soudés de l'unité de manutention (30) vers une destination située à l'extérieur du dispositif (1) exclusivement par la deuxième section latérale du dispositif (1).

2. Dispositif (1) selon la revendication 1, **caractérisé en ce qu'**au moins une unité de paramètres de procédé (8) permet de commander et/ou de réguler des paramètres de procédé présents dans un espace intérieur (9, 9', 9", 9‴) d'au moins une chambre de procédé, en particulier la pression et/ou la température et/ou l'atmosphère présentes dans l'espace intérieur (9, 9', 9", 9‴) d'au moins une chambre de procédé peut être commandée et/ou réglée par l'unité de paramètres de procédé (8).

3. Dispositif (1) selon l'une quelconque des revendications précédentes, **caractérisé en ce que** les chambres de procédé (6, 6', 6", 6‴) comportent chacune au moins un orifice d'introduction et/ou d'exécution (10, 10', 11, 11') par lequel un assemblage (2) à souder et/ou soudé peut être introduit dans la chambre de procédé (6, 6', 6", 6‴) par un mouvement d'introduction et/ou d'exécution (12, 13) ou extrait de la chambre de procédé (6, 6', 6", 6‴), le mouvement d'introduction (12) pour introduire un assemblage (2) dans une chambre de procédé (6, 6', 6", 6‴) est préféré parallèlement au mouvement d'exécution (13) pour exécuter un assemblage (2) à partir de cette chambre de procédé (6, 6', 6", 6"'), le mouvement d'introduction (12) dans la direction opposée est le mouvement d'exécution (13).

4. Dispositif (1) selon la revendication 3, **caractérisé en ce que** le mouvement d'insertion (12) pour introduire un assemblage (2) dans une chambre de procédé (6, 6', 6", 6‴) et le mouvement d'exécution (13) pour exécuter un assemblage (2) à partir de cette chambre de procédé (6, 6', 6", 6"') ne sont pas alignés parallèlement.

5. Dispositif (1) selon l'une quelconque des revendications 3 à 4, **caractérisé en ce qu'**au moins un orifice d'introduction et/ou d'exécution (12, 13) d'au moins une chambre de procédé (6, 6', 6", 6"') peut être fermé au moins par section par au moins un élément de fermeture, en particulier qu'au moins un élément de fermeture ferme la chambre de procédé (6, 6', 6", 6‴) de telle sorte qu'une température et/ou une pression et/ou une atmosphère présentes dans l'intérieur (9, 9', 9", 9‴,) de la chambre de procédé (6, 6', 6", 6‴) soient fermées à une zone située à l'extérieur de cette chambre de procédé (6, 6', 6", 6‴).

6. Dispositif (1) selon l'une quelconque des revendications précédentes, **caractérisé par** au moins un dispositif de convoyage (15) comprenant au moins un moyen de transport (14) pour l'exécution d'un mouvement de convoyage (16), dans lequel, au moyen du moyen du moyen de transport (14), un sous-ensemble (2) à souder et/ou à braser (2) peut être déplacé d'une première position vers une première position de transfert (18) affectée à une première chambre de traitement (6), en particulier le mouvement de convoyage (16) du moyen de transport (14) comprend un composant de mouvement dans le sens vertical.

7. Dispositif (1) selon l'une quelconque des revendications précédentes, **caractérisé en ce que** le mouvement de transfert (22, 23) comprend un composant de mouvement dans le sens horizontal.

8. Dispositif (1) selon la revendication 6 ou 7, **caractérisé en ce que** le dispositif de convoyage (15) et/ou le dispositif de transfert (21) sont disposés dans une unité de manutention (30, 30', 31, 31'), l'unité de manutention (30, 30', 31, 31') étant liante ou reliée à l'installation de la chambre de traitement (5, 5', 50, 50').

9. Dispositif (1) selon la revendication 8, **caractérisé en ce que** l'unité de manutention (30, 30', 31, 31') est conçue comme un système de transport mobile (32), en particulier comme un système de transport mobile sans conducteur (FTS), de préférence au moins un assemblage brasé ou à souder (2) peut être transporté par le système de transport mobile (32) d'un premier endroit éloigné du dispositif à un deuxième endroit proche du dispositif (33).

10. Dispositif (1) selon la revendication 8 ou 9, **caractérisé en ce que** les composants de l'unité de manutention (30, 30', 31, 31') et/ou les composants de l'appareil de la chambre de traitement (5, 5', 50, 50') sont entourés, au moins par sections, d'un boîtier commun.

11. Dispositif (1) selon l'une quelconque des revendications 6 à 10, **caractérisé en ce qu'**au moins deux unités de manutention comprenant chacune au moins un dispositif de convoyage (15) et/ou un dispositif de transfert (21) (30, 30', 31, 31') peuvent être reliées ou reliées à l'installation de la chambre de procédé (5, 5', 50, 50'), de préférence l'alimentation d'un sous-ensemble (2) à souder ou à braser à l'au moins une chambre de procédé (6, 6', 6", 6"') par l'intermédiaire d'une première unité de manutention (30, 30') et l'évacuation de l'ensemble (2) à souder et/ou à braser (2) de cette chambre de procédé (6, 6', 6", 6"') par l'intermédiaire d'une deuxième unité de manutention (31).

12. Dispositif (1) reliés entre eux par l'un des dispositifs antérieurs comportant au moins deux chambres de traitement (5, 5', 50, 50') disposées l'une au-dessus de l'autre, notamment en piles (6, 6', 6", 6‴, 29, 29'), de préférence les chambres de traitement (6, 6', 6", 6"') de la première chambre de traitement (5) et les chambres de traitement (29, 29') de la deuxième chambre de traitement (5') sont orientées parallèlement.

13. Procédé de fonctionnement d'un dispositif (1) de brasage d'un assemblage (2) selon l'une quelconque des revendications précédentes, comprenant les étapes de procédé suivantes:
- Mise à disposition d'au moins un assemblage (2),
- Insertion d'au moins un assemblage (2) dans un espace intérieur (9, 9', 9", 9‴) d'une chambre de traitement (6, 6', 6", 6"'),
- effectuer un procédé de brasage dans un espace intérieur (9, 9', 9", 9"') d'au moins une chambre de procédé (6, 6', 6", 6"'),
- Retirer au moins un assemblage (2) de l'intérieur (9, 9', 9", 9‴) de la chambre de procédé (6, 6', 6", 6"') après le procédé de brasage, étant entendu que:
au moins une installation de transfert (21) comprenant au moins un moyen de transfert (20, 20') pour l'exécution d'un mouvement de transfert (22, 23), étant entendu que:
- au moyen du moyen de transfert (20, 20'), au moins un assemblage à souder et/ou brasé (2)
-- d'une position non de travail, en particulier d'une position de transfert (18), à une première position de travail (24) située à l'intérieur (9) d'une première chambre de traitement (6), et/ou
-- d'une première position de travail (24) située à l'intérieur (9) d'une première chambre de traitement (6) à une position de non-travail, en particulier une position de transfert (18) et/ou
-- d'une première position de travail (24) située à l'intérieur (9) d'une première chambre de traitement (6) à une deuxième position de travail (25)
Il est déplaçable,
- le moyen de transfert (20, 20') pénètre au moins par sections et temporairement dans l'habitacle (9) de la chambre de traitement (6, 6', 6", 6"').

14. Procédé selon la revendication 13, **caractérisé en ce que** l'exécution du procédé de brasage comprend le chauffage d'au moins un assemblage (2) disposé dans l'habitacle (9, 9', 9", 9"') de la chambre de procédé (6, 6', 6", 6"'), dans lequel, après le chauffage d'au moins un assemblage (2), au moins un assemblage (2) est soumis à un processus de refroidissement dans la chambre de procédé (6, 6', 6", 6"') ou après le déplacement d'au moins un assemblage (2) dans une autre chambre de procédé (6, 6', 6", 6"', 29, 29').
